(19) Europäisches Patentamt

European Patent Office

Office européen des brevets

(11) **EP 0 853 275 B1**

(12) **FASCICULE DE BREVET EUROPEEN**

(45) Date de publication et mention
de la délivrance du brevet:
**13.09.2000 Bulletin 2000/37**

(51) Int Cl.⁷: $G06F\ 7/52$, $G06F\ 7/72$

(21) Numéro de dépôt: **97470032.0**

(22) Date de dépôt: **19.12.1997**

(54) **Coprocesseur comprenant deux circuits de multiplication opérant en parallèle**

Koprozessor mit zwei parallel arbeitenden Multiplizierschaltungen

Coprocessor comprising two multiplying circuits operating in parallel

(84) Etats contractants désignés:
**DE FR GB IT**

(30) Priorité: **09.01.1997 FR 9700264**

(43) Date de publication de la demande:
**15.07.1998 Bulletin 1998/29**

(73) Titulaire: **STMicroelectronics S.A.**
**94250 Gentilly (FR)**

(72) Inventeur: **Monier, Guy**
**57000 Metz (FR)**

(74) Mandataire: **Ballot, Paul Denis Jacques**
**Cabinet Ballot-Schmit,**
**9 Rue Claude Chappé**
**57070 Metz (FR)**

(56) Documents cités:
**EP-A- 0 395 240**          **EP-A- 0 601 907**
**US-A- 4 771 379**

**Description**

L'invention concerne un coprocesseur comprenant deux circuits de multiplication opérant en parallèle. Elle s'applique en particulier à l'amélioration d'un coprocesseur d'arithmétique connu et permettant de réaliser des opérations modulaires selon la méthode de Montgomery, afin d'étendre les possibilités de ce coprocesseur. La méthode de Montgomery permet d'effectuer des calculs modulaires dans un corps fini $GF(2^n)$ (corps de Galois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrites par exemple dans un document D1 consistant en une demande de brevet français publiée sous le numéro FR-A-2 679 054.

On trouve dans le commerce des circuits intégrés dédiés à de telles applications, par exemple le produit fabriqué par la société SGS-Thomson Microelectronics et portant la référence ST16CF54, bâti autour d'une association de type unité centrale - coprocesseur arithmétique, et dédié à la mise en oeuvre de calculs modulaires. Le coprocesseur utilisé permet de traiter des opérations modulaires en utilisant la méthode de Montgomery. Il fait l'objet de la demande de brevet européen publiée sous le numéro EP-A-0 601 907 A2 que l'on appellera par la suite le document D2. Ce coprocesseur est illustré sur la figure 1 (cette figure correspondant à la figure 2 du document D2).

L'opération de base (appelée Pfield) mise en oeuvre par ce coprocesseur consiste, à partir de trois données binaires A (multiplicande), B (multiplieur), et N (modulo), codées sur un nombre entier n de bits, à produire une donnée binaire $P_{field}(A, B)_N$ codée sur n bits, telle que $P_{field}(A, B)_N = A * B * I \bmod N$. I est une donnée binaire, appelée erreur, et codée sur n bits tels que $I = 2^{-n} \bmod N$ (plus précisément, la valeur de I dépend du nombre de blocs de k bits, k un entier, considérés pour le codage de A). Pour réaliser l'opération $A * B * I \bmod N$, on considère que les données sont codées sur m mots de k bits (m et k étant des nombres entiers), avec $m * k = n$. On fournit les mots des données A et B à un circuit de multiplication 19 ayant une entrée série pour recevoir B, une entrée parallèle pour recevoir les blocs de k bits de A, et une sortie série.

Dans le coprocesseur décrit dans le document D2, on a k = 32 et m = 8 ou 16. Ce dispositif peut être utilisé pour produire le résultat de la multiplication modulaire A * B mod N. La multiplication modulaire se décompose en deux opérations élémentaires Pfield successives. On calcule $P_{field}(P_{field}(A, B)_N, H)_N$, avec H une donnée codée sur n bits, appelée paramètre de correction d'erreur, et égale à $2^{2n} \bmod N$. Pour de plus amples détails sur la mise en oeuvre de la multiplication modulaire, on pourra se reporter au document D2. Plusieurs possibilités de calcul sont déjà connues; elles consistent à utiliser soit une méthode logicielle, soit un circuit spécialisé tel que celui illustré dans le document D2.

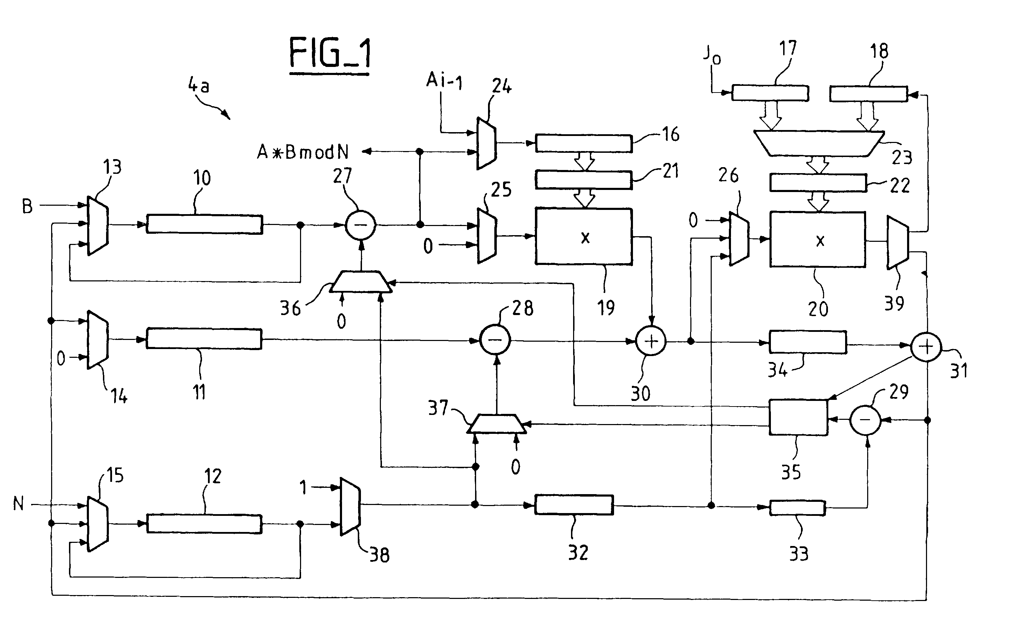

Le coprocesseur 4a illustré sur la figure 1 comprend :

- trois registres à décalage 10, 11 et 12 à entrée et sortie série, ces registres comportant un nombre n de cellules, avec n = m * k ,
- des multiplexeurs 13, 14 et 15 placés respectivement devant les entrées des registres 10, 11 et 12,
- trois registres 16, 17 et 18 à entrée série et sortie parallèle, et comportant k cellules,
- deux circuits 19 et 20 de multiplication comprenant une entrée série, une entrée parallèle et une sortie série,
- deux registres 21 et 22 de k cellules,
- des multiplexeurs 24, 25, 26, 36, 37 et 38,
- un démultiplexeur 39,
- des circuits 27, 28 et 29 de soustraction série,
- des circuits 30 et 31 d'addition série,
- des cellules à retard 32, 33 et 34 pour retarder de k temps de cycle la propagation de données binaires,
- un circuit 35 de comparaison.

Pour plus de détails sur les arrangements des différents éléments du coprocesseur entre eux, on pourra se reporter au document D2, en particulier aux figures 2 et 3, et aux extraits de la description s'y rapportant : page 15 - ligne 54 à page 16 - ligne 13, et page 17 - ligne 50 à page 18 - page 55.

L'utilisation du coprocesseur 4a illustré sur la figure 1 pour réaliser une opération $P_{field}(A, B)_N$ où A, B, et N sont codés sur n bits en m mots de k bits, N est impaire et A est découpé en m mots $A_{i-1}$ (avec i indice entier variant de 1 à m), comprend les étapes suivantes :

1 - initialisation du circuit :

- calcul de manière logicielle d'un paramètre $J_0$ défini par la relation $[(N * J_0) + 1] \bmod 2^k = 0$ et chargement en série du paramètre $J_0$ dans le registre 17,
- chargement en série de B dans le registre 10, chargement en série de N dans le registre 12, chargement en série de $A_0$ dans le registre 16 et chargement en série de n zéros logiques consécutifs dans le registre 11,
- initialisation des deux circuits 19 et 20 de multiplication, des trois circuits 27,28 et 29 de soustraction, et des deux circuits 30 et 31 d'addition.

2 - mise en oeuvre d'une boucle indicée par i avec i variant de 1 à m.

- chargement en parallèle dans le registre 21 du contenu du registre 16,
- réalisation de différentes opérations élémentaires afin d'effectuer les calculs suivants :

$$X(i) = S(i - 1) + B * A_{i-1}$$

$$Y_0(i) = (X(i) * J_0) \bmod 2^k,$$

$$Z(i) = X(i) + (N * Y0(i))$$

$$S(i) = Z/2^k,$$

/ étant la division entière,

soustraction lors de l'itération suivante de N ou 0 à S suivant que S soit supérieur ou non à N,
3 - sortie du résultat S(k) par l'intermédiaire d'une borne de sortie.

Pour plus de détails sur le déroulement d'un tel procédé, on peut se référer au document D2, et plus particulièrement aux extraits suivants : page 4 - ligne 41 à page 6 - ligne 17 et page 19 - lignes 7 à 49.

Jusqu'à présent, l'utilisation du dispositif illustré sur la figure 1 permet d'optimiser des traitements (en terme de durée de calcul, de taille mémoire, etc.) pour des opérations modulaires utilisant une taille de donnée fixée, en l'occurrence 256 ou 512 bits (selon que m soit égal à 8 ou à 16). Or, la cryptographie nécessite des machines de plus en plus performantes, travaillant de plus en plus vite et utilisant des clefs de plus en plus complexes. On s'oriente ainsi vers la manipulation de données codées sur 768 ou même 1024 bits. Pour traiter de telles données, on peut envisager de réaliser un dispositif de dimensions plus importantes en adaptant les éléments du dispositif aux tailles des données. Cette solution peut poser des problèmes dans des applications telles que les cartes à puce pour lesquelles la taille des circuits est physiquement limitée à cause des différences de flexibilité entre les cartes et les substrats de silicium. De plus, il est demandé d'intégrer de plus en plus d'éléments fonctionnels différents sur une telle carte et la place disponible pour un circuit de cryptage en est d'autant plus réduite. Il faut donc trouver des solutions permettant de limiter l'augmentation de la taille de ce dispositif, tout en permettant de fonctionner de manière optimum pour des données de taille supérieure à la taille des registres prévues initialement. Cette problématique ne se limite pas à des coprocesseurs d'arithmétique modulaire traitant des données d'une taille fixe de 256 ou 512 bits. Elle est également transposable plus généralement à des coprocesseurs manipulant des données et qu'on souhaite utiliser pour effectuer des opérations sur des données dont la taille dépasse leur capacité de traitement.

Si on désire réaliser des opérations modulaires utilisant des opérandes d'une taille supérieure à ce que gère le coprocesseur (c'est-à-dire en pratique à la taille des registres), on peut utiliser un processeur classique (8, 16, ou 32 bits), une mémoire et le coprocesseur de la figure 1, le coprocesseur servant à effectuer des multiplications classiques (c'est-à-dire non modulaires).

Il est possible d'effectuer avec le coprocesseur décrit dans D2 des multiplications A * B classiques sur des tailles allant jusqu'à n bits en procédant de la manière suivante :

1 - initialisation :

- chargement dans le registre 17 de k zéros logiques, chargement dans le registre 10 de B, chargement dans les registres 11 et 12 de n zéros logiques et chargement dans le registre 16 du mot $A_0$ de k bits de A,
- initialisation du circuit de multiplication 19, initialisation des circuits d'addition et de soustraction 28, 30 et 31.

2 - mise en oeuvre d'une boucle de calcul avec i indice variant de 1 à m:

- chargement du contenu du registre 16 dans le registre 21,
- réalisation, par décalage à droite simultané des registres 10 et 11, de la multiplication de $A_{i-1}$ par B et de l'addition du contenu du registre 11 avec le résultat du produit,
- stockage des k bits de poids faible dans le registre 12 par décalage à droite de k bits, et stockage des n bits de poids fort du résultat dans le registre 11,
- chargement du mot $A_i$ dans le registre 16 (de préférence pendant le déroulement d'une ou de plusieurs des étapes précédentes).

A la fin d'un tel procédé, on a donc le poids faible du résultat dans le registre 12 et le poids fort du résultat dans le registre 11. Il suffit de rajouter une borne de sortie reliée à la sortie des registres 11 et 12 pour pouvoir récupérer le résultat en sortie du coprocesseur.

Il est possible d'effectuer la multiplication d'une donnée B codée sur n bits par une donnée A codée sur m' mots avec m' entier supérieur à m. Pour cela, on exécute la boucle avec i variant de 1 à m'. Toutes les m itérations, on sort le contenu du registre 12 par une borne de sortie.

Le coprocesseur pouvant être utilisé pour réaliser des multiplications classiques, il est possible de réaliser des opérations modulaires sur des opérandes codées sur un nombre m' * k bits avec m' > m. Pour cela on manipule les opérandes A, B et N en les divisant en q (q entier) sous-opérandes de n bits : A[q-1] A[q-2] ... A[0]. B[q-1] B[q-2] ... B[0], N[q-1] N[q-2] ... N[0]. On utilise le coprocesseur pour réaliser des multiplications classiques sur les sous-opérandes.

La méthode est la suivante :

1.1 - Multiplication de B par la première sous-opérande de la donnée A :

1 - calcul de $A[0] * B[0]$. Le résultat est de la forme $R[1]_0$ $R[0]_0$ avec $R[1]_0$ et $R[0]_0$ des données binaires codées sur n bits. Sortie de $R[1]_0$ et $R[0]_0$ des registres 11 et 12 et stockage de celles-ci dans une mémoire.

2 - calcul de $A[0] * B[1]$. Le résultat est de la forme $R[1]_1$ $R[0]_0$ avec $R[1]_1$ et $R[0]_1$ des données binaires codées sur n bits. Sortie de $R[1]_1$ et $R[0]_1$ des registres 11 et 12 et stockage de celles-ci dans une mémoire.

.
.

Q - calcul de $A[0] * B[q-1]$. Le résultat est de la forme $R[1]_{q-1}$ $R[0]_{q-1}$ avec $R[1]_{q-1}$ et $R[0]_{q-1}$ des données binaires codées sur n bits. Sortie de $R[1]_{q-1}$ et $R[0]_{q-1}$ des registres 11 et 12 et stockage de celles-ci dans une mémoire.

1.2 - Calcul du résultat de la multiplication de B par la première sous-opérande de la donnée A :

- calcul de $R[1]_0 + R[0]_1$ et stockage du résultat, noté X[1],
- calcul de $c_1 + R[1]_1 + R[0]_2$ ($c_1$ étant la retenue du calcul précédant) et stockage du résultat noté X[2],
.
.
- calcul de $c_{q-2} + R[1]_{q-2} + R[0]_{q-1}$ et stockage du résultat noté X[q-1],
- calcul de $c_{q-1} + R[1]_{q-1}$ et stockage du résultat noté X[q].

Si on considère que $R[0]_0 = X[0]$, alors le résultat de la multiplication est la donnée X[q] X[q-1]... X[1] X[0].

On pourra bien sûr effectuer les additions au fur et à mesure de la sortie des résultats, ce qui permet de minimiser la taille de la mémoire dans laquelle sont stockés les résultats.

1.3 - Calcul du résultat d'une multiplication :

$X[0] * J[0] = Y$, avec Y de la forme Y[1] Y[0], Y[1] et Y[0] étant codées sur n bits, sortie et mémorisation de Y[0]

1.4 - Calcul du résultat de la multiplication de la première sous-opérande de Y par la donnée N :

1 - calcul de $Y[0] * N[0]$. Le résultat est de la forme $T[1]_0$ $T[0]_0$ avec $T[1]_0$ et $T[0]_0$ des données binaires codées sur n bits. Sortie de $T[1]_0$ et $T[0]_0$ des registres 11 et 12 et stockage de celles-ci dans une mémoire.

2 - calcul de $Y[0] * N[1]$. Le résultat est de la forme $T[1]_1$ $T[0]_1$ avec $T[1]_1$ et $T[0]_1$ des données binaires codées sur n bits. Sortie de $T[1]_1$ et $T[0]_1$ des registres 11 et 12 et stockage de celles-ci dans une mémoire.

.
.

Q - calcul de $Y[0] * N[q-1]$. Le résultat est de la forme $T[1]_{q-1}$ $T[0]_{q-1}$ avec $T[1]_{q-1}$ et $T[0]_{q-1}$ des données binaires codées sur m mots de k bits. Sortie de $T[1]_{q-1}$ et $T[0]_{q-1}$ des registres 11 et 12 et stockage de celles-ci dans une mémoire.

1.5 - Calcul du résultat de la multiplication de N par la première sous-opérande de la donnée Y :

- calcul de $T[1]_0 + T[0]_1$ et stockage du résultat, noté U[1],
- calcul de $c_1 + T[1]_1 + T[0]_2$ ($c_1$ étant la retenue du calcul précédant) et stockage du résultat noté U[2],
.
.
- calcul de $c_{q-2} + T[1]_{q-2} + T[0]_{q-1}$ et stockage du résultat noté U[q-1],
- calcul de $c_{q-1} + T[1]_{q-1}$ et stockage du résultat noté U[q].

Si on considère que $T[0]_0 = U[0]$, alors le résultat de la multiplication est la donnée U[q] U[q-1] ... U[1] U[0].

On pourra bien sûr effectuer les additions au fur et à mesure de la sortie des résultats, ce qui permet de minimiser la taille de la mémoire dans laquelle sont stockés les résultats.

1.6 - Calcul du résultat de la multiplication modulaire de B par la première sous-opérande de la donnée A :

- calcul de U + X et stockage du résultat, noté Z.

Le résultat Z de l'addition est de la forme (c) Z[q] Z[q-1] ... Z[1] Z[0].

- stockage de $S(1) = Z/2^k - (N \text{ ou } 0)$.

2 - Reprise des étapes 1.1 à 1.6 en considérant la deuxième sous-opérande de la donnée A et en modifiant l'étape 1.2 tel que ci-dessous :

- calcul de $R[1]_0 + R[0]_1$ et stockage du résultat, noté W[1],
- calcul de $c_1 + R[1]_1 + R[0]_2$ ($c_1$ étant la retenue du calcul précédant) et stockage du résultat noté W[2],

.
.

- calcul de $c_{q-2} + R[1]_{q-2} + R[0]_{q-1}$ et stockage du résultat noté W[q-1],
- calcul de $c_{q-1} + R[1]_{q-1}$ et stockage du résultat noté W[q].

Puis:

- calcul de W + S(1) qui donne alors le résultat de la multiplication X avec X de la forme X[q] X [q-1] ... X[1] X[0] et W = W[q] W[q-1] ... W[1] W [0] avec $W[0] = R[0]_0$.

.
.

Q - Reprises de l'étape 2 ci-dessus en considérant la q-ième sous-opérande de A.

Le résultat final du calcul est S(q) - (N ou 0).

Comme on le voit, le procédé nécessite un certain nombre d'échanges de données avec l'extérieur. Ces échanges sont pénalisants en terme de temps de calcul et d'espace mémoire pour stocker les résultats extraits du coprocesseur. Généralement, l'intérêt des coprocesseurs est d'utiliser une fréquence d'horloge plus rapide que celle des autres éléments qui leur sont reliés. On minimise donc l'intérêt d'utiliser un coprocesseur si les traitements auxquels il est destiné impliquent des échanges de données avec des circuits (processeurs classiques, mémoires, etc.) fonctionnant plus lentement et à la vitesse desquels il devra s'adapter lors de ces échanges.

L'inventeur a cherché à modifier le coprocesseur illustré sur la figure 1 de sorte à améliorer le traitement des opérations ci-dessus, et plus particulièrement à diminuer le temps de traitement. Pour ce faire, l'inventeur propose de modifier le dispositif existant de sorte qu'il utilise en parallèle les circuits de multiplication 19 et 20, ce qui permet de réaliser plus rapidement des opérations, modulaires ou non. Le dispositif selon l'invention permet de mettre en oeuvre des nouveaux procédés de calcul, plus rapides que les procédés pouvant être mis en oeuvre par le dispositif de la figure 1.

Ainsi, l'invention concerne un dispositif pour effectuer une opération A * B ou une opération A * B + C + D, A, B, C et D étant des données codées sur m mots de k bits, m et k étant des entiers, m étant pair, le dispositif comprenant :

- un premier registre à décalage de m * k bits pour contenir B,
- un deuxième registre à décalage de m * k bits pour contenir une partie du résultat actualisé de l'opération et éventuellement C ou D,
- un troisième et un quatrième registre à décalage de k bits ayant une entrée série et une sortie parallèle pour contenir de manière successive des mots pairs et impairs de A,

- un cinquième registre à décalage de m * k bits pour contenir une partie du résultat actualisé de l'opération et éventuellement C ou D,
- au moins une borne d'entrée pour recevoir des données binaires à stocker dans ces registres,
- un premier circuit de multiplication permettant de réaliser une opération de multiplication entre deux données stockées dans les premier et troisième registres,
- un premier circuit d'addition permettant de réaliser des opérations d'addition entre une donnée stockée dans le deuxième registre et une donnée produite par le premier circuit de multiplication,

   caractérisé en ce qu'il comporte:

- un deuxième circuit de multiplication permettant de réaliser une opération de multiplication entre deux données stockées dans les premier et quatrième registres, parallèlement à l'opération de multiplication entre les deux données stockées dans les premier et troisième registres,
- un deuxième circuit d'addition permettant de réaliser une opération d'addition entre une donnée produite par le premier circuit d'addition et une donnée fournie au deuxième circuit d'addition par le deuxième circuit de multiplication,
- une première cellule à retard pour retarder de k temps de cycle la fourniture au deuxième circuit d'addition de la donnée fournie par le deuxième circuit de multiplication,
- des moyens de multiplexage permettant de fournir sélectivement à des entrées du premier circuit d'addition le contenu du deuxième registre ou un état logique permanent, de relier une entrée du deuxième circuit de multiplication à une sortie du premier registre, de relier la sortie du premier circuit de multiplication à l'un des registres, et de fournir au deuxième circuit d'addition une donnée produite par le premier circuit d'addition ou un état logique permanent.

Selon un mode de réalisation, les moyens de multiplexage comprennent un premier multiplexeur comprenant deux entrées série et une sortie série, une première entrée dudit multiplexeur étant reliée à une sortie du deuxième registre, une deuxième entrée du multiplexeur recevant un état logique permanent et la sortie du multiplexeur étant reliée à une entrée du premier circuit d'addition.

Selon un mode de réalisation, le dispositif comprenant en outre un circuit de soustraction placé entre le deuxième registre et le premier circuit d'addition et permettant de réaliser une opération de soustraction entre une donnée stockée dans le deuxième registre et une donnée stockée dans le cinquième registre, le premier multiplexeur comprend une troisième entrée série, ledit multiplexeur étant placé entre le circuit de soustraction et le premier circuit d'addition et la troisième entrée dudit multiplexeur étant reliée à une sortie du circuit de soustraction.

Selon un mode de réalisation, le dispositif comprend en outre un troisième circuit d'addition, monté en série avec le premier circuit d'addition et permettant de réaliser des opérations d'addition entre des données stockées dans les deuxième et cinquième registres et une donnée produite par le premier circuit de multiplication, et des moyens de multiplexage permettant de fournir sélectivement à une entrée du cinquième circuit d'addition le contenu du troisième registre ou un état logique permanent.

Selon un mode de réalisation, les moyens de multiplexage comprennent un deuxième multiplexeur ayant une première entrée, cette première entrée permettant de relier la sortie du premier ou du troisième circuit d'addition à l'un des registres pour stocker tout ou partie des données produites par addition entre des données stockées dans les deuxième et cinquième registres et une donnée produite par le premier circuit de multiplication.

Selon un mode de réalisation, le deuxième multiplexeur comprend une deuxième entrée reliée à la sortie du deuxième circuit d'addition pour stocker dans l'un ou plusieurs des registres des données produites par ce deuxième circuit de multiplication.

Selon un mode de réalisation, les troisième et quatrième registres étant utilisés pour fournir des données aux premier et deuxième circuits de multiplication, le dispositif comprend des moyens pour relier la sortie de l'un des deuxième ou cinquième registres à des entrées de ces troisième et quatrième registres.

Selon un mode de réalisation, le dispositif comprend un sixième registre à entrée série et sortie série et des moyens de multiplexage pour relier la sortie de ce sixième registre à des entrées des troisième et quatrième registres.

Selon un mode de réalisation, le dispositif comprend un troisième multiplexeur pour relier sélectivement l'entrée du troisième registre à la sortie du sixième registre ou à une borne d'entrée.

Selon un mode de réalisation, le dispositif comprend un quatrième multiplexeur comprenant deux entrées et une sortie, une première entrée du quatrième multiplexeur étant reliée à une borne d'entrée pour recevoir des données de l'extérieur du dispositif, une deuxième entrée du quatrième multiplexeur étant reliée à la sortie du sixième registre pour réintroduire dans ledit registre les données qui sont fournies sur sa sortie.

Selon un mode de réalisation, le dispositif comprend en outre une deuxième cellule à retard placée entre une sortie du premier circuit d'addition et une entrée du deuxième circuit d'addition, et des moyens de multiplexage pour relier directement lesdits premier et deuxième circuits d'addition, évitant ainsi d'introduire un retard entre lesdits circuits.

L'invention concerne également un dispositif comprenant un processeur, une mémoire, un bus de communication et un dispositif tel que défini précédemment.

L'invention concerne également un procédé de mise en oeuvre d'une multiplication A * B non modulaire, A et B étant des données binaires codées sur m * k bits, m et k étant des entiers, ces données étant subdivisées en m mots de k bits $A = A_{m-1} ... A_0$ et $B = B_{m-1} ... B_0$, m étant pair, caractérisé en ce qu'il comporte les étapes de:

- chargement de la donnée B dans un premier registre à décalage de m * k bits,
- chargements successifs des mots de A d'indice pair dans un troisième registre à décalage de k bits à entrée série et sortie parallèle,
- chargements successifs des mots de A d'indice impair dans un quatrième registre à décalage de k bits à entrée série et sortie parallèle,
- réalisations successives dans des premier et deuxième multiplieurs, par décalage simultané du premier registre et d'un deuxième registre de m * k bits destiné à contenir une partie du résultat actualisé de l'opération, des multiplications de B par les mots d'indice pair et les mots d'indice impair de A,
- additions successives, dans un premier circuit d'addition, de zéros logiques ou du contenu du deuxième registre avec le résultat fourni par le premier circuit de multiplication,
- additions successives, dans un deuxième circuit d'addition, d'une part de m * k bits produits par le premier circuit de multiplication ou par le premier circuit d'addition, les m * k bits étant complétés de k zéros, et d'autre part de (m + 1) *k bits produits par le deuxième circuit de multiplication, la donnée produite par le deuxième circuit de multiplication étant retardée de k temps de cycle,
- stockages successifs, dans un cinquième registre à décalage de m * k bit, des k premiers bits produits par le premier circuit de multiplication et des k premiers bits produits par le deuxième circuit d'addition lors de chaque décalage,
- stockages successifs des m * k bits de poids fort obtenus lors de chaque décalage dans le deuxième registre.

Selon un mode de réalisation particulier, le procédé comprend les étapes suivantes :

1 - Initialisation.

- chargement des données A et B dans un sixième et le premier registres de m * k bits, à entrée et sortie série, et chargement des mots $A_0$ et $A_1$ dans des troisième et quatrième registres,
- initialisation de premier et deuxième circuits d'addition et de premier et deuxième circuits de multiplication,

- sélection d'une deuxième entrée d'un premier multiplexeur, de sorte qu'il fournisse en permanence des zéros logiques à une première entrée série du premier circuit d'addition,
- sélection d'une entrée d'un cinquième multiplexeur, de sorte que les données produites par le deuxième circuit de multiplication soient fournies avec un retard de k coups d'horloge à une entrée série du deuxième circuit d'addition,
- sélection d'entrées d'un sixième et d'un septième multiplexeurs de sorte à relier une sortie du premier registre à des entrées série des premier et deuxième circuits de multiplication.

2 - mise en oeuvre d'une boucle de calcul avec i indice variant de 1 à m/2.
2.1 - itération 1.

- chargement des contenus des troisième et quatrième registres dans des septième et huitième registres de k bits, à entrée et sortie parallèle, ces sorties étant reliées à des entrées parallèles des premier et deuxième circuits de multiplication,
- réalisation, par décalage à droite simultané des contenus du premier registre et du deuxième registre de m * k bits à entrée et sortie série, des multiplications des mots $A_1$ et $A_0$ par la donnée B, les données produites par les premier et deuxième circuits de multiplication étant codées sur (m + 1) * k bits,
- addition, dans le premier circuit d'addition, des bits produits par le premier circuit de multiplication avec les bits fournis par le premier multiplexeur,
- stockage des k premiers bits produits par le premier circuit de multiplication dans le cinquième registre de m * k bits à entrée et sortie série,
- addition, dans le deuxième circuit d'addition, des (m + 1) * k bits produits par le deuxième circuit de multiplication avec les m * k bits de poids fort produits par le premier circuit de multiplication, ces bits étant complétés par k zéros,
- stockage dans le cinquième registre des k premiers bits produits par le deuxième circuit d'addition et stockage dans le deuxième registre des m * k bits suivants,
- transfert des mots $A_3$ et $A_2$ dans les troisième et quatrième registres,
- sélection d'une première entrée du premier multiplexeur, afin de relier la sortie du deuxième registre à la première entrée du premier circuit d'addition.

2.j - itération j, j variant de 2 à m/2 - 1.

- chargement des contenus des troisième et quatrième registres dans les septième et huitième registres,
- réalisation, par décalage à droite simultané des contenus des premier et deuxième registres, des multiplications des mots $A_{2j-1}$ et de $A_{2j-2}$ par la donnée B,
- addition, dans le premier circuit d'addition, des bits produits par le premier circuit de multiplication avec le contenu du deuxième registre,
- stockage des k premiers bits produits par le premier circuit d'addition dans le cinquième registre,
- addition, dans le deuxième circuit d'addition, des (m + 1) * k bits produits par le deuxième circuit de multiplication avec les m * k bits de poids fort produits par le premier circuit d'addition complétés de k zéros pour assurer une taille identique des données additionnées,
- stockage dans le cinquième registre des k premiers bits produits par le deuxième circuit d'addition et stockage dans le deuxième registre des m * k bits suivants,
- lors des opérations ci-dessus, transfert des mots $A_{2j+1}$ et $A_{2j}$ dans les troisième et quatrième registres.

2.m/2 - itération m/2.
Reprise de l'étape 2.j, hormis le transfert de mots du sixième registre dans les troisième et quatrième registres, les m * k bits de poids faible du résultat étant dans le cinquième registre et les m * k bits de poids fort du résultat étant dans le deuxième registre à la fin de cette itération.

L'invention sera mieux comprise, et d'autres particularités et avantages apparaîtront, à la lecture de la description qui va suivre et qui est à lire conjointement aux dessins annexés dans lesquels :

- la figure 1 représente un coprocesseur 4a selon l'état de la technique,
- la figure 2 représente un exemple de configuration de circuit comprenant un coprocesseur,
- la figure 3 représente un exemple de réalisation de coprocesseur 4b selon l'invention.

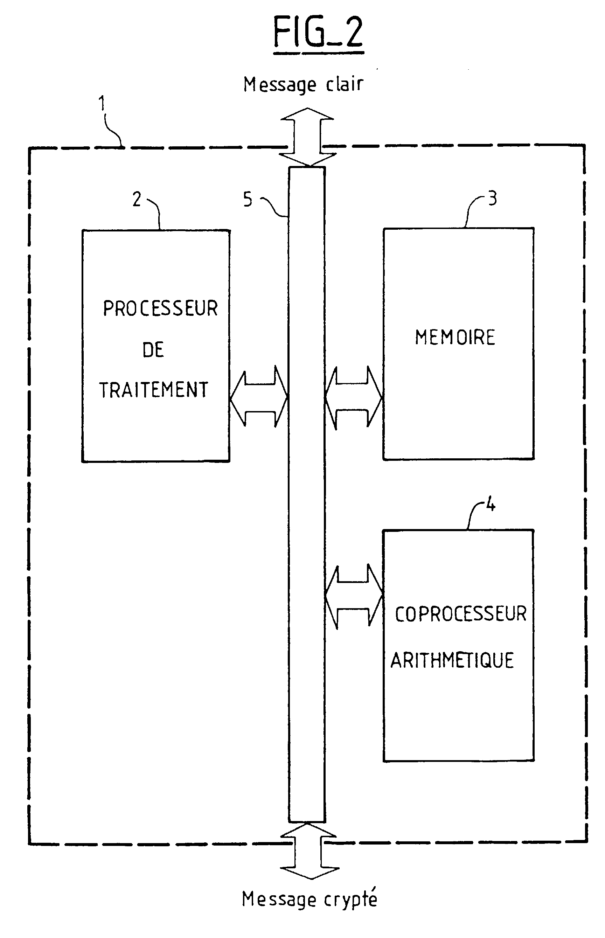

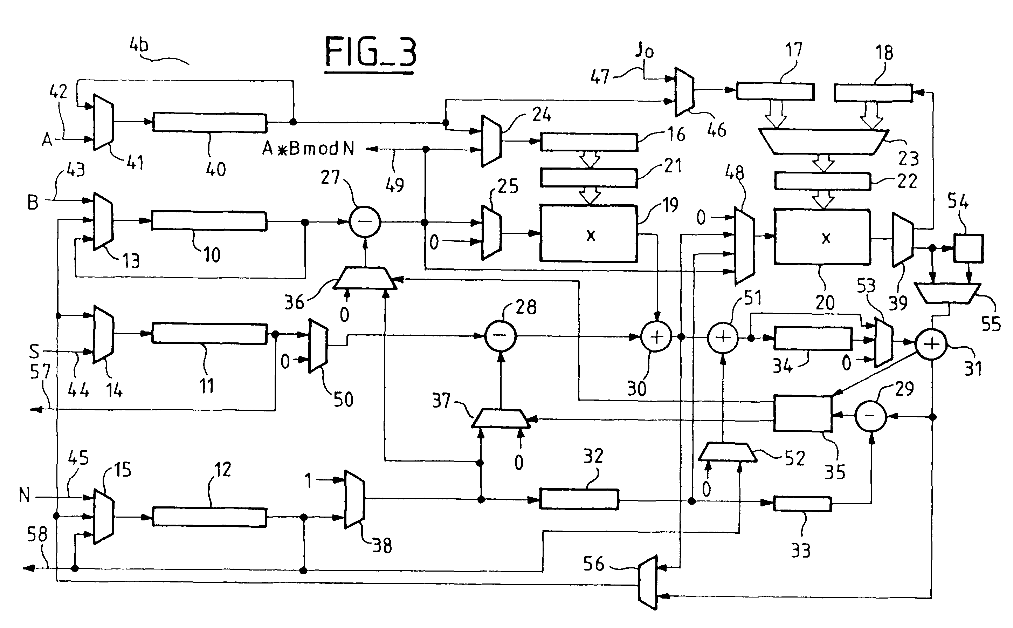

La figure 2 représente un circuit 1 de cryptage comprenant un processeur 2 de traitement (par exemple un processeur 8, 16, ou 32 bits), une mémoire 3, un coprocesseur 4, et un bus 5 de communication. Le bus 5 permet de relier les éléments 2, 3 et 4 ensemble et/ou à l'extérieur du circuit 1 afin d'échanger des données et/ou des signaux de commande. La mémoire permet de stocker des données binaires de différents formats. Le processeur 2 permet de gérer les échanges d'informations entre la mémoire 3, le coprocesseur 4 et l'extérieur. Le coprocesseur est par exemple une version modifiée du coprocesseur 4a illustré sur la figure 1, tel qu'illustrée sur la figure 3.
La figure 3 représente un exemple de coprocesseur 4b selon l'invention.

Le dispositif illustré sur la figure 3 comprend :

- quatre registres à décalage 10, 11, 12 et 40 à entrée série et sortie série. Ces registres comportent un nombre n (n entier) de cellules, avec n = m * k (m et k entiers).

- un multiplexeur 41 comprenant deux entrées série et une sortie série. La sortie série du multiplexeur 41 est reliée à l'entrée du registre 40. Une première entrée du multiplexeur 41 est reliée à une première borne d'entrée 42 et une deuxième entrée du multiplexeur 41 est reliée à la sortie du registre 40.

- un multiplexeur 13 comprenant trois entrées série et une sortie série. La sortie série du multiplexeur 13 est reliée à l'entrée du registre 10. Une première entrée du multiplexeur 13 est reliée à une deuxième borne d'entrée 43 et une deuxième entrée du multiplexeur 13 est reliée à la sortie du registre 10.

- un multiplexeur 14 comprenant deux entrées série et une sortie série. La sortie série du multiplexeur 14 est reliée à l'entrée du registre 11 et une première entrée du multiplexeur 14 est reliée à une troisième borne d'entrée 44.

- un multiplexeur 15 comprenant trois entrées série et une sortie série. La sortie série du multiplexeur 15 est reliée à l'entrée du registre 12. Une première entrée du multiplexeur 15 est reliée à une quatrième borne d'entrée 45 et une deuxième entrée du multiplexeur 15 est reliée à la sortie du registre 12.

- trois registres 16, 17 et 18 de k cellules comprenant une entrée série et une sortie parallèle,

- un multiplexeur 46 comprenant deux entrées série et une sortie série. La sortie série du multiplexeur 46 est reliée à l'entrée du registre 17. Une première entrée du multiplexeur 46 est reliée à une cinquième borne d'entrée 47 et une deuxième entrée du multiplexeur 46 est reliée à la sortie du registre 40.

- deux circuits 19 et 20 de multiplication comprenant une entrée série, une entrée parallèle pour recevoir k bits et une sortie série,

- deux registres 21 et 22 de mémorisation de k cellules comprenant une entrée et une sortie parallèles. L'entrée du registre 21 est reliée à la sortie du registre 16. La sortie du registre 21 est reliée à l'entrée parallèle du circuit de multiplication 19 et la sortie du registre 22 est reliée à l'entrée parallèle du circuit de multiplication 20.

- un multiplexeur 23 comprenant deux entrées parallèles et une sortie parallèle. Une première entrée du multiplexeur 23 est reliée à la sortie du registre 17 et une deuxième entrée du multiplexeur 23 est reliée à la sortie du registre 18. La sortie du multiplexeur 23 est reliée à l'entrée du registre 22.

- deux multiplexeurs 24 et 25 comprenant chacun deux entrées série et une sortie série. La sortie du multiplexeur 24 est reliée à l'entrée du registre 16. Une première entrée du multiplexeur 24 est reliée à la sortie du registre 40. La sortie du multiplexeur 25 est reliée à l'entrée série du circuit de multiplication 19 et une première entrée du multiplexeur 25 reçoit un zéro logique.

- un multiplexeur 48 comprenant quatre entrées série et une sortie série. La sortie du multiplexeur 48 est reliée à l'entrée série du circuit de multiplication 20 et une première entrée de ce multiplexeur reçoit un zéro logique.

- des circuits de soustraction 27, 28 et 29 comprenant chacun deux entrées série et une sortie série. Une première entrée du circuit 27 est reliée à la sortie du registre 10. La sortie du circuit 27 est reliée à chacune des deuxièmes entrées des multiplexeurs 24 et 25, à une borne de sortie 49 et à une quatrième entrée du multiplexeur 48.

- un multiplexeur 50 comprenant deux entrées série et une sortie série. La sortie du multiplexeur 50 est reliée à une première entrée du circuit 28. Une première entrée du multiplexeur 50 est reliée à la sortie du registre 11 et une deuxième entrée de ce multiplexeur reçoit un zéro logique.

- trois circuits d'addition 30, 31 et 51 comprenant chacun deux entrées série et une sortie série. Une première entrée du circuit 30 est reliée à la sortie du circuit 19 et une deuxième entrée de ce circuit est reliée à la sortie du circuit de soustraction 28. La sortie du circuit 30 est reliée d'une part à une deuxième entrée du multiplexeur 48 et d'autre part à une première entrée du circuit 51. La sortie du circuit 31 est reliée à une première entrée du circuit 29.

- un multiplexeur 52 comprenant deux entrées série et une sortie série. La sortie du multiplexeur 52 est reliée à une deuxième entrée du circuit d'addition 51. Une première entrée du multiplexeur 52 est reliée à la sortie du registre 12 et une deuxième entrée de ce multiplexeur reçoit un zéro logique.

- un multiplexeur 53 comprenant trois entrées série et une sortie série. La sortie série du multiplexeur 53 est reliée à une première entrée du circuit d'addition 31 et une première entrée de ce multiplexeur est reliée à la sortie du circuit d'addition 51. La troisième entrée du multiplexeur reçoit un zéro logique.

- des cellules à retard 32, 33 et 34 pour retarder de k temps de cycle la propagation de données binaires (ces cellules étant typiquement des registres à décalage de k bits, c'est-à-dire de la taille des registres 16, 17 et 18), ces cellules comprenant une entrée série et une sortie série. La sortie de la cellule 32 est reliée d'une part à une troisième entrée du multiplexeur 48 et d'autre part à l'entrée de la cellule 33. La sortie de la cellule 33 est reliée à une deuxième entrée du circuit 29. L'entrée de la cellule 34 est reliée à la sortie du circuit d'addition 51 et la sortie de la cellule 34 est reliée à une deuxième entrée du multiplexeur 53.

- un circuit 35 de comparaison comprenant deux entrées série et deux sorties. Une première entrée du circuit 35 est reliée à la sortie du circuit 31 et une deuxième entrée du circuit 35 est reliée à la sortie du circuit 29.

- deux multiplexeurs 36 et 37 comprenant chacun deux entrées série, une entrée de sélection, et une sortie série. Chacune des premières entrées série des multiplexeurs 36 et 37 reçoit un zéro logique. Chacune des entrées de sélection est reliée à l'une des sorties du circuit 35. La sortie du multiplexeur 36 est reliée à une deuxième entrée du circuit 27 et la sortie du multiplexeur 37 est reliée à une deuxième entrée du circuit 28.

- un multiplexeur 38 comprenant deux entrées série et une sortie série. Une première entrée du multiplexeur 38 reçoit un "un" logique. Une deuxième entrée du multiplexeur 38 est reliée à la sortie du registre 12. La sortie du multiplexeur 38 est reliée d'une part à l'entrée de la cellule 32 et d'autre part à des deuxièmes entrées des multiplexeurs 36 et 37.

- un démultiplexeur 39 comprenant une entrée série et deux sorties série. L'entrée du démultiplexeur 39 est reliée à la sortie du circuit 20 et une première sortie du démultiplexeur 39 est reliée à l'entrée du registre 18.

- une cellule à retard 54 pour retarder de k temps de cycle la propagation de données binaires (ces cellules étant typiquement des registres à décalage de k bits), cette cellule comprenant une entrée série et une sortie série. L'entrée de la cellule 54 est reliée à une deuxième sortie du démultiplexeur 39.

- un multiplexeur 55 comprenant deux entrées série et une sortie série. Une première entrée du multiplexeur 55 est reliée à la deuxième sortie du démultiplexeur 39. Une deuxième entrée du multiplexeur 55 est reliée à la sortie de la cellule 54 et la sortie du multiplexeur 55 est reliée à une deuxième entrée du circuit d'addition 31.

- un multiplexeur 56 comprenant deux entrées série et une sortie série. Une première entrée du multiplexeur 56 est reliée à la sortie du circuit d'addition 51, c'est-à-dire à la sortie du deuxième des deux circuits d'addition 30 et 51 montés en série. Une deuxième entrée du multiplexeur 56 est reliée à la sortie du circuit d'addition 31. La sortie de ce multiplexeur est reliée à des troisièmes entrées des multiplexeurs 13 et 15 et à une deuxième entrée du multiplexeur 14.

- deux bornes de sortie 57 et 58 reliées respectivement aux sorties des registres 11 et 12.

Comme on le verra par la suite, cet exemple de coprocesseur réalisé conformément à l'invention pourra subir des modifications sans qu'on sorte de l'invention.

En ce qui concerne les bornes de sortie et d'entrée, on pourra choisir d'utiliser des bornes distinctes mais celles-ci pourront être aussi une ou des bornes d'entrée/sortie communes à plusieurs éléments du coprocesseur. En utilisant des bornes distinctes, un avantage est de pouvoir recevoir et/ou fournir des données de et/ou à des éléments extérieurs au coprocesseur (tels que le processeur de traitement 2 par exemple) en parallèle, ce qui diminue la durée des échanges entre le circuit et des éléments extérieurs.

D'autre part, en ce qui concerne les éléments du coprocesseur 4b, la description ci-dessus doit aussi être comprise comme étant une description plus fonctionnelle que structurelle. En d'autres termes, il importe de pouvoir réaliser les connexions telles qu'indiquées entre des éléments réalisant les fonctions énumérées (multiplexage, addition, soustraction, etc.). En particulier, les multiplexeurs pourront être regroupées entre eux et comporter alors un nombre d'entrées, de sorties, et d'entrées de sélection plus importants. En ce qui concerne les multiplexeurs 25, 36, 37, 40, 50, 52 et 53 qui ont une entrée recevant un signal fixe (zéro ou un logique), on pourra les incorporer fonctionnellement aux circuits 19, 27, 28, 30 et 51 si ceux-ci comprennent une entrée de commande permettant d'imposer un état logique sur une de leur entrées.

Par rapport au dispositif de la figure 1, le dispositif de la figure 3 comprend les mêmes éléments, quelques éléments ajoutés et des modifications dans les connexions des éléments entre eux. En particulier, le dispositif de la figure 3 comprend un registre 40 supplémentaire, un circuit d'addition 51 supplémentaire, une cellule à retard 54 supplémentaire et des multiplexeurs 41, 46, 50, 52, 53, 55 et 56 supplémentaires. Le multiplexeur 14 a sa première entrée reliée à une borne d'entrée 44. Enfin, le multiplexeur 48 comprend une entrée supplémentaire, de sorte qu'on peut fournir à l'entrée série du circuit de multiplication 20 les données stockées dans le registre 10.

Le registre 40 permet de stocker dans le coprocesseur une opérande A de n bits, ce qui permet de limiter les échanges entre le coprocesseur et l'extérieur et d'obtenir en conséquence un gain de temps. Le multiplexeur 46 permet de charger le registre 17 avec des bits fournis par le registre 40, ce qui permet d'utiliser en parallèle les circuits d'addition 19 et 20 sans nécessiter de chargement successifs des registres 16 et 17 avec des mots fournis au coprocesseur.

On pourra éventuellement se passer du registre 40 et du multiplexeur 46, et charger en parallèle depuis l'extérieur des mots de k bits, afin de mettre en oeuvre un fonctionnement en parallèle des circuits de multiplication 19 et 20. On peut également, comme on le verra par la suite, utiliser l'un des registres 11 ou 12 pour mémoriser les données à fournir aux registres 16 et 17. Dans ce cas on relie la sortie de ce registre 11 ou 12 aux première et deuxième entrées des multiplexeurs 24 et 46.

Le multiplexeur 41 permet, en rebouclant la sortie du registre 40 sur son entrée, de garder en permanence intact le contenu de ce registre, lorsque l'on fournit par décalage des mots en sortie de ce registre. Ainsi, si le fonctionnement du coprocesseur est interrompu, on pourra reprendre le cours des opérations à une étape déjà réalisée, sans avoir à recharger le registre depuis l'extérieur du coprocesseur. On prendra simplement soin de procéder aux décalages nécessaires dans le registre pour revenir dans l'état correspondant à l'étape que l'on souhaite réaliser (si les mots contenus dans le registre 40 sont toujours identiques, leur ordonnancement évolue en fonction des décalages réalisés).

Le multiplexeur 50 permet de forcer à zéro la deuxième entrée du circuit d'addition 30 indépendamment du contenu du registre 11. Cela permet de rendre le circuit d'addition 30 transparent au flux de bits produits en sortie du circuit de multiplication 19. En effet, dans ce cas, les bits sur la sortie du circuit d'addition 30 sont identiques à ceux qui sont reçus sur la première entrée de ce circuit.

On notera qu'on pourra placer le multiplexeur 50 directement entre la sortie du circuit de soustraction 28 et la première entrée du circuit d'addition 30. On utilisera alors un multiplexeur à trois entrées ayant une première entrée reliée à la sortie du registre 11, une deuxième entrée reliée à la sortie du circuit de soustraction 28 et une troisième entrée recevant un zéro logique. En s'affranchissant ainsi du circuit de soustraction 28, on pourra diminuer la consommation globale du coprocesseur 4b en prévoyant d'isoler le circuit 28 et éventuellement d'autres circuits (tels que le multiplexeur 37) qui lui sont rattachés fonctionnellement, quand le circuit 28 n'est pas utilisé. Une autre solution consiste à utiliser un multiplexeur 50 à deux entrées, tel qu'illustré sur la figure 3, et à sélectionner la première entrée du multiplexeur 37 afin que le circuit de soustraction 28 ne modifie pas les bits fournis au circuit d'addition 30 par le registre 11.

La quatrième entrée du multiplexeur 48 pourra être reliée directement à la sortie du registre 10 (ce qui est équivalent, d'un point de vue fonctionnel, à la relier à la sortie du circuit de soustraction 27, si ce dernier reçoit sur sa deuxième entrée un zéro logique en permanence).

Le circuit d'addition 51 permet de mettre en oeuvre des opérations du type A * B + C + D , les données C et D étant fournies par les registres 11 et 12.

Le multiplexeur 52 permet d'une part de fournir le contenu du registre 12 au circuit d'addition 51, pour mettre en oeuvre ladite opération, ou d'autre part de lui fournir en permanence un zéro logique. Cette dernière particularité permet de rendre transparent le circuit d'addition 51 aux bits produits par les circuits de multiplication 19 et d'addition 30. Cela permet, d'une part, de réaliser simplement l'opération A * B + C (il n'est alors pas nécessaire de charger le registre 12 avec n zéros logiques) et, d'autre part, de réaliser sans complication excessive les opérations habituelles pour lesquelles le dispositif de la figure 1 est prévu (il convient seulement de prévoir un signal de commande de sélection supplémentaire pour le multiplexeur 52).

On notera que l'on pourra placer le circuit d'addition 51 entre la sortie du circuit de multiplication 19 et la première entrée du circuit d'addition 30, et relier la première entrée du multiplexeur 56 à la sortie du circuit d'addition 30.

On pourra également placer le circuit d'addition 51 entre la sortie du registre 11 et la deuxième entrée du circuit d'addition 30. De même que précédemment, on relie alors la première entrée du multiplexeur 56 à la sortie du circuit d'addition 30.

On pourra également placer le circuit d'addition 51 entre la sortie du multiplexeur 53 et la première entrée du circuit d'addition 31.

On peut encore placer le circuit d'addition 51 en aval du circuit d'addition 31. Cela rend plus complexe la gestion d'opérations du type A * B + C + D dans la mesure où l'on peut être alors amené à additionner, en aval du circuit d'addition 31, des données de poids inférieur au poids des données fournies en sortie du circuit d'addition 31. Il convient alors de prévoir un moyen pour retarder, en aval du circuit d'addition 31, les données produites par ce circuit 31 ou, en amont, la fourniture de données à ce circuit 31. On notera que ce placement du circuit d'addition 51 en aval du circuit d'addition 31 n'est pas gênant pour la réalisation de multiplications simples sur des données de n bits puisque, dans ce cas, le circuit 51 n'est pas utilisé (comme on le verra ultérieurement).

Comme on le verra ultérieurement, le circuit d'addition 51 est utilisé pour réaliser des opérations sur des données de taille supérieure à n, ces opérations nécessitant des manipulation du type A * B + C + D . On pourra s'en passer si on souhaite simplement obtenir un gain de temps sur des opérations concernant des données de taille inférieure ou égale à n, l'invention portant avant tout sur l'utilisation simultanée des deux circuits de multiplication 19 et 20.

Le multiplexeur 53 permet de relier la sortie du circuit d'addition 51 directement à la première entrée du circuit d'addition 31, sans retarder le transfert de données entre ces circuits par le biais de la cellule à retard 34. Il permet aussi de fournir des zéros logiques au circuit d'addition 31. Cela permet, comme on le verra plus tard, de compléter éventuellement avec k zéros logiques les données de n bits fournies par les circuits d'addition 30 et 51 au circuit d'addition 31, afin que la taille de ces données corresponde aux (n + k) bits des données produites par le circuit de multiplication 20.

On pourra éventuellement utiliser un multiplexeur à deux entrées et ne pas contourner la cellule à retard 34 mais cela se fera au détriment du temps de calcul, du fait de la traversée systématique de cette cellule à retard 34. On pourra aussi remplacer fonctionnellement, lors des opérations, la troisième entrée du multiplexeur 53 par une sélection des premières entrées des multiplexeurs 25 et 37 et des deuxièmes entrées des multiplexeurs 50 et 52, de sorte que la première entrée du multiplexeur 53 reçoive alors des zéros logiques.

La cellule à retard 54 permet de retarder de k temps de cycle le flux des bits produits par le circuit de multiplication 20.

On peut ainsi additionner des bits produits par les circuits de multiplication 19 et 20 sans tenir compte des k premiers bits fournis par le circuit de multiplication 19 lors d'une opération. Le multiplexeur 55 permet de mettre en oeuvre ladite opération tout en permettant d'utiliser le coprocesseur amélioré de la figure 3 pour réaliser les opérations mises en oeuvre par le coprocesseur de la figure 1 (il suffit pour cela de relier directement la deuxième sortie du démultiplexeur 39 à la deuxième entrée du circuit d'addition 31).

Si on ne court-circuite pas la cellule à retard 34 par le biais du multiplexeur 53, on modifiera la cellule 54 de sorte à obtenir un retard de 2 * k temps de cycle.

Le multiplexeur 56 permet de mémoriser dans l'un des registres 10 à 12 les bits produits par les circuits d'addition 30 (si la deuxième entrée du circuit d'addition 51 reçoit un zéro logique, auquel cas le circuit 51 est transparent aux bits produits par le circuit 30) ou 51.

On peut aussi mémoriser directement les bits produits par le circuit de multiplication 19, en sélectionnant les multiplexeurs 50, 37 et 52 pour qu'ils fournissent un zéro logique sur leur sortie. Dans cette hypothèse, les données reçues sur la première entrée du multiplexeur coïncident avec les données produites en sortie du circuit de multiplication 19.

On peut, grâce à l'invention, réaliser une multiplication non modulaire sans tenir compte des éléments du dispositif 4a utilisés dans le cadre d'une opération Pfield. On peut donc envisager dans un tel cas de limiter la consommation du circuit 4 en inhibant le fonctionnement des éléments utilisés seulement dans le cadre d'une opération Pfield mais non utilisés dans les procédés de calcul décrits ci-après.

D'autre part, l'invention permet de réaliser des opérations en utilisant en parallèle les deux circuits de multiplication 19 et 20. On divise par deux le temps de calcul, en traitant en parallèle deux mots de k bits du multiplicande A, ainsi qu'on va le décrire ci-après. Avec le dispositif illustré sur la figure 3, quand on fournit simultanément deux mots du multiplicande aux circuits de multiplication 19 et 20, on fournit le mot de poids le plus faible au circuit 19 et le mot de poids le plus fort au circuit 20.

**1. Multiplication non modulaire sur des données de taille inférieure ou égale à n bits.**

Supposons que l'on souhaite réaliser une multiplication A * B classique, les données binaires A et B étant codées sur n bits. On considère la subdivision des données A et B en m mots de k bits. Soit $A = A_{m-1} \ldots A_0$ et $B = B_{m-1} \ldots B_0$ .

On considère que m est un multiple de deux.

Si ce n'est pas le cas, on utilisera par exemple des registres de (m + 1) * k bits. On pourra aussi commander le multiplexeur 48 de sorte à fournir des zéros logiques sur l'entrée série du circuit de multiplication 20 lorsque l'on fournit le m-ième mot de k bits de la donnée A sur l'entrée parallèle du circuit de multiplication 19 (le circuit de multiplication 20 produit alors n + k zéros logiques).

De même, les données A et B pourront être de taille inférieure à n. On complétera alors éventuellement les poids forts de ces données avec des zéros pour obtenir des données de taille égale à n bits, si on souhaite n'avoir qu'un seul programme de commande du coprocesseur. On peut également prévoir un séquencement de commande du dispositif comprenant un nombre variable de boucles de calcul, ce qui permet de diminuer le temps de traitement si les données sont codées sur un nombre de bits inférieur à n. On pourra également utiliser des opérandes de tailles différentes, en complétant avec des zéros logiques l'opérande de taille inférieure ou en adaptant le programme de commande du coprocesseur.

On procède de la manière suivante :

### 1 - Initialisation.

- chargement dans les registres 10 et 40 des données B et A, et chargement de $A_0$ et $A_1$ dans les registres 16 et 17,
- initialisation des circuits d'addition 30, 31 et 51, et des circuits de multiplication 19 et 20 (et éventuellement des circuits de soustraction si ils rentrent dans les chemins de traitement des données; dans ce cas on sélectionnera les multiplexeurs 36 et 37 de sorte que leur sortie fournisse en permanence un zéro logique, ce qui équivaut à rendre les circuits de soustraction 27 et 28 transparents aux flux de bits reçus sur leurs premières entrées),
- sélection des deuxièmes entrées des multiplexeurs 50 et 52, de sorte qu'ils fournissent en permanence des zéros logiques aux deuxièmes entrées des circuits d'addition 30 et 51,
- sélection de la deuxième entrée du multiplexeur 55, de sorte que les données produites par le circuit de multiplication 20 soient fournies avec un retard de k coups d'horloge au circuit d'addition 31,
- sélection des deuxième et quatrième entrées des multiplexeur 25 et 48.

### 2 - mise en oeuvre d'une boucle de calcul avec i indice variant de 1 à m/2.
#### 2.1 - itération 1.

- chargement des contenus des registres 16 et 17 dans les registres 21 et 22,
- réalisation, par décalage à droite simultané des contenus des registres 10 et 11, des multiplica-

tions de $A_1$ et de $A_0$ par B. Les données produites par les circuits de multiplication 19 et 20 sont codées sur n + k bits.

- addition, dans le circuit d'addition 30, des bits produits par le circuit de multiplication 19 avec les bits fournis par le multiplexeur 50 (autrement dit avec une donnée nulle) et addition avec une donnée nulle dans le circuit d'addition 51,
- stockage des k premiers bits produits par le circuit de multiplication 19 dans le registre 12, la première entrée du multiplexeur 56 étant sélectionnée.
- addition, dans le circuit d'addition 31, des n + k bits produits par le circuit de multiplication 20 avec les n bits de poids fort produits par le circuit de multiplication 19, ces bits étant complétés par k zéros et sélection de la deuxième entrée du multiplexeur 56,
- stockage dans le registre 12 des k premiers bits produits par le circuit d'addition 31 et stockage dans le registre 11 des n bits suivants,
- lors des opérations ci-dessus, transfert des mots $A_3$ et $A_2$ dans les registres 16 et 17,
- sélection de la première entrée du multiplexeur 50, afin de relier la sortie du registre 11 à la deuxième entrée du circuit d'addition 30.

2.j - itération j, j variant de 2 à m/2 - 1.

- chargement des contenus des registres 16 et 17 dans les registres 21 et 22,
- réalisation, par décalage à droite simultané des registres 10 et 11, des multiplications de $A_{2j-1}$ et de $A_{2j-2}$ par B; les données produites par les circuits de multiplication 19 et 20 sont codées sur n + k bits.,
- addition, dans le circuit d'addition 30, des bits produits par le circuit de multiplication 19 avec le contenu du registre 11,
- stockage des k premiers bits produits par le circuit d'addition 30 dans le registre 12, la deuxième entrée du multiplexeur 56 étant sélectionnée et le circuit d'addition 51 étant transparent aux bits fournis par le circuit d'addition 30,
- addition, dans le circuit d'addition 31, des n + k bits produits par le circuit de multiplication 20 avec les n bits de poids fort produits par le circuit d'addition 30 (complétés de k zéros pour assurer une taille identique des données additionnées) et sélection de la première entrée du multiplexeur 56,
- stockage dans le registre 12 des k premiers bits produits par le circuit d'addition 31 et stockage dans le registre 11 des n bits suivants,
- lors des opérations ci-dessus, transfert des mots $A_{2j+1}$ et $A_{2j}$ dans les registres 16 et 17.

2.m/2 - itération m/2.

Reprise de l'étape 2.j, hormis le transfert de mots du registre 40 dans les registres 16 et 17 (ce transfert est inutile).

A la fin de cette itération, les n bits de poids faible du résultat sont dans le registre 12 et les n bits de poids fort sont dans le registre 11.

Le gain de temps pour réaliser l'opération est de 50% par rapport au dispositif illustré sur la figure 1 (si on tient compte des étapes de calcul proprement dites, l'étape d'initialisation étant de durée identique pour les dispositifs des figures 1 et 3).

On note que le circuit d'addition 51 n'est pas utilisé dans la mise en oeuvre du procédé. On pourra donc améliorer dans un premier temps le dispositif selon l'état de l'art en implémentant le dispositif de la figure 3, à l'exception du circuit d'addition 51 et du multiplexeur 52.

On pourra aussi, comme on l'a déjà mentionné ci-dessus, placer le circuit d'addition 51 entre la sortie du circuit de multiplication 19 et la première entrée du circuit d'addition 30. Il conviendra alors de relier la première entrée du multiplexeur 56 à la sortie du circuit 30 si on souhaite réaliser des opérations du type A * B + C + D tels qu'illustrées ci-après.

On peut également, sans modifier le dispositif de la figure 3, échanger les rôles des circuits d'addition 51 et 30 d'une part, et des registres 11 et 12 d'autre part.

On pourra éventuellement placer le circuit d'addition 51 entre la sortie du registre 11 et le circuit d'addition 30. Cela n'introduit aucune différence dans le déroulement du procédé décrit ci-dessus mais il conviendra alors de relier la première entrée du multiplexeur 56 à la sortie du circuit d'addition 30.

Par ailleurs, si on souhaite simplement améliorer le dispositif selon l'état de l'art dans la mise en oeuvre de la multiplication sur des données de taille n, on pourra également supprimer le registre 40 et utiliser le registre 12 pour stocker la donnée A. On modifiera alors le circuit illustré en connectant la sortie du registre 12 aux première et deuxième entrées des multiplexeurs 24 et 46. En effet, à chaque itération, on fournit deux mots de k bits aux registres 16 et 17 et on stocke deux mots de k bits dans le registre 12. On peut donc se contenter d'utiliser le registre 12, les mots de la donnée A étant progressivement remplacés par les mots de poids les plus faibles du résultat final de l'opération.

On notera que, dans la mise en oeuvre en parallèle d'opérations de multiplication telle que décrite, le circuit de multiplication 19, placé en amont du circuit de multiplication 20, produit les bits de poids les plus faibles.

On peut éventuellement opérer de manière inverse. Dans ce cas, on retarde les données produites par le circuit de multiplication 19 dans la cellule 34 (qui remplace alors fonctionnellement la cellule 54) et on fournit respectivement k premiers et k derniers zéros logiques aux première et deuxième entrées du circuit d'addition 31 pour faire correspondre les poids des données reçues par ce circuit d'addition 31. Le multiplexeur 56 n'ayant pas lieu d'être, on peut l'enlever.

Un problème se pose pour l'addition du contenu du registre 11 aux données produites par les circuits de multiplication 19 et 20. Une solution est de retarder les données produites par le circuit de multiplication 19 entre la sortie de ce circuit et la première entrée du circuit d'addition 30. Dans ce cas on doit court-circuiter la cellule 34 (ou bien utiliser la cellule 54 pour retarder les données en sortie du circuit de multiplication 20) pour que les bits de poids identiques soient additionnés au moment opportun dans le circuit d'addition 31. Une autre solution est de disposer le circuit d'addition 51 en aval du circuit d'addition 31 et de fournir les données du registre 11 au circuit 51 par le biais de moyens de multiplexage adéquats. Dans ce cas, le circuit d'addition 51 remplace le circuit d'addition 30 pour l'addition des données produites par les circuits de multiplication et le contenu du registre 11. On doit alors rajouter au circuit connu ce circuit d'addition 51, alors que, dans l'exemple décrit en détail, ce circuit 51 n'est pas utilisé et peut être supprimé si on ne souhaite pas traiter des données de taille supérieure à n. On ne rentrera pas dans le détail de l'inversion du rôle des circuits de multiplication, celle-ci ne posant pas de difficulté à l'homme du métier dans sa mise en oeuvre, compte tenu des indications données ci-dessus et de la description du dispositif illustré sur la figure 3.

On notera enfin que pour réaliser la cellule 54 on pourra, dans le mesure où la cellule 34 n'est pas utilisée par ailleurs, utiliser cette cellule 34. Dans ce cas, il suffit d'une part de disposer un multiplexeur en entrée de la cellule 34 (pour pouvoir relier cette entrée à la deuxième sortie du démultiplexeur 39 ou à la sortie de l'un des circuits d'addition 30 ou 51, selon la disposition de ceux-ci) et d'autre part de disposer un démultiplexeur en sortie de cette cellule 34 (pour pouvoir relier cette sortie à la deuxième entrée du multiplexeur 55 ou à la deuxième entrée du multiplexeur 53).

**2. Multiplication sur des données de taille supérieure à n.**

Supposons que l'on souhaite réaliser une multiplication classique A * B = C , les données binaires A et B étant codées sur une taille supérieure à n. A titre d'exemple, on considérera des données codées sur 2 * n bits, le résultat C étant codé sur 4 * n bits. A, B et C sont de la forme A[1] A[0], B[1] B[0] et C[3] C[2] C[1] C[0], les opérandes A[1] à C[0] étant codées sur n bits.

De même que précédemment, on étendra sans difficultés le procédé décrit pour des opérandes de tailles différentes.

En utilisant le dispositif de la figure 1, on procède de la manière suivante :

1 - chargement de la donnée B[0] dans le registre 10.

2 - calcul de A[0] * B[0] = R[1] C[0], R[1] et C[0] étant codées sur n bits et mémorisées en dehors du coprocesseur à la fin du calcul.

3 - calcul de A[1] * B[0] = R'[1] R'[0], R'[1] et R'[0] étant codées sur n bits et mémorisées en dehors du coprocesseur à la fin du calcul.

4 - chargement de la donnée B[1] dans le registre 10.

5 - calcul de A[0] * B[1] = R''[1] R''[0] , R''[1] et R''[0] étant codées sur n bits et mémorisées en dehors du coprocesseur à la fin du calcul.

6 - calcul de A[1] * B[1] = R'''[1] R'''[0], , R'''[1] et R''' [0] étant codées sur n bits et mémorisées en dehors du coprocesseur à la fin du calcul.

Les étapes ultérieures sont réalisées en dehors du coprocesseur, par exemple à l'aide d'un processeur ou d'un circuit câblé dédié.

7 - calcul de R'[1] R'[0] + R[1] = T[1] T[0], T[1] et T[0] étant codées sur n bits.

8 - calcul de T[1] T[0] + R''[1] R''[0] = T'[1] C[1] , T'[1] et C[1] étant codées sur n bits.

9 - calcul de R'''[1] R'''[0] + T'[1] = C[3] C[2], C[3] C[2] étant codées sur n bits.

En utilisant le dispositif de la figure 3, la même opération peut s'effectuer de la manière suivante :

1 - chargement des données A[0] et B[0] dans les registres 40 et 10.

2 - calcul de A[0] * B[0] + 0 + 0 = R[1] C[0] (selon le procédé décrit ci-dessus) et sortie de la donnée C[0] du registre 12, la donnée R[1] étant stockée dans le registre 11,

3 - chargement de la donnée A[1] dans le registre 40 (celui-ci pouvant être réalisé lors du décalage de A[0] vers les registres 16 et 17).

4 - calcul de A[1] * B[0] + R[1] + 0 = R'[1] R'[0], la sélection du multiplexeur 50 ayant été modifiée de sorte à relier la sortie du registre 11 à la deuxième entrée du circuit d'addition 30 lors de la première itération de la boucle, et sortie de la donnée R'[1] du registre 11, la donnée R'[0] étant stockée dans le registre 12.

5 - chargement des données A[0] et B[1] dans les registres 40 et 10 (ceux-ci pouvant être réalisés lors de la dernière itération du calcul de l'étape 4).

6 - calcul de A[0] * B[1] + 0 + R'[0] = R''[1] C[1] , la sélection du multiplexeur 52 ayant été modifiée de sorte à relier la sortie du registre 12 à la deuxième entrée du circuit d'addition 51 lors de la première itération de la boucle, et sortie de la donnée C[1] du registre 12, la donnée R''[1] étant stockée dans le registre 11.

7 - chargement des données A[1] et R'[1] dans les registres 40 et 12.

8 - calcul de A[1] * B[1] + R"[1] + R'[1] = C[3] C[2].

Le gain en temps de calcul est de 50% pour les étapes 2, 3, 5 et 6 de l'état de la technique, gain auquel il faut ajouter l'absence des étapes correspondant à des additions externes sur 2 * n bits. En outre, avec le dispositif de la figure 1, il convient de tenir compte des sorties systématiques de données vers l'extérieur du coprocesseur, une fois les multiplications réalisées (ce qui est préjudiciable du point de vue temporel et du point de vue de l'espace mémoire nécessaire pour le stockage).

Avec le dispositif selon l'invention, la seule donnée qui est sortie, outre les sous-opérandes du résultat, est le résultat intermédiaire R'[1]. On pourra éventuellement réaliser la sortie de R'[1] directement à la sortie du multiplexeur 56, en reliant cette sortie à une borne de sortie. Cela permet d'effectuer ce transfert lors du calcul de l'étape 4.

Le procédé décrit est donné à titre d'exemple. On pourra mettre en oeuvre d'autres procédés tout en continuant à bénéficier des avantages procurés par l'utilisation simultanée des deux circuits de multiplication 19 et 20.

Ainsi, on pourra par exemple utiliser la méthode de Karatsuba, décrite ci-dessous :

1 - comparaison, d'une part, des n bits de A[0] et A[1] et, d'autre part, des n bits de B[0] et B[1] (on supposera que A[1] et B[1], codées sur n bits, sont supérieurs à A[0] et B[0]).

2 - calcul de A[0] * B[0] dans le coprocesseur et sortie du résultat, noté C[0] et codé sur 2 * n bits

3 - calcul de A[1] * B[1] dans le coprocesseur et sortie du résultat, noté C[1] et codé sur 2 * n bits

4 - calcul de (B[1] - B[0]) et (A[1] - A[0]), sur n bits

5 - calcul de (B[1] - B[0]) * (A[1] - A[0]) dans le coprocesseur et sortie du résultat C[3], codé sur 2 * n bits

6 - calcul de 2 * C[0] + 2 * C[1] + C[3]

On ne réalise que trois multiplications au lieu de quatre (la multiplication par deux s'obtenant directement, en logique binaire, par décalage des données) et l'opération peut être plus rapide (selon la différence des fréquences d'horloges utilisées par le coprocesseur et le processeur). Cela nécessite par contre des échanges entre le coprocesseur et l'extérieur, et de l'espace mémoire pour stocker les résultats intermédiaires. On notera que les additions pourront éventuellement être réalisées en utilisant les ressources du coprocesseur (registres et circuits d'addition).

Pour la mise en oeuvre de la multiplication sur des données de taille supérieure à 2 * n, le procédé nécessite des échanges entre le coprocesseur et l'extérieur, puisque l'on doit alors pouvoir additionner au moins trois données de mêmes poids. Il n'en reste pas moins que le coprocesseur selon l'invention reste avantageux dans la mise en oeuvre des opérations de multiplication. D'autre part, si on considère que n = 512, la possibilité d'effectuer des calculs sur 1024 bits apparaît à ce jour comme étant généralement suffisante compte tenu des objectifs de sécurité dans les applications civiles du cryptage.

## 3. Opérations modulaire sur des données de taille supérieure à n : exemple 1.

Le coprocesseur illustré à la figure 3 permet de réaliser des opérations modulaires sur des opérandes codées sur un nombre m' * k bits avec m' supérieur ou égal à m de manière plus rapide que le dispositif de la figure 1.

Pour cela on manipule les opérandes A, B et N en les divisant en q (q entier) sous-opérandes de n bits : A[q-1] A[q-2] ... A[0], B[q-1] B[q-2] ... B[0], N[q-1] N[q-2] ... N[0]. On notera que A et B pourront avoir en pratique des tailles différentes. On suppose ici, pour simplifier, que A et B ont la même taille. On supposera également que la donnée A comprend un nombre paire de sous-opérandes (si ce n'est pas le cas, on pourra la compléter par des bits de poids fort mis à zéro de sorte à se ramener à un nombre paire). On ne rentrera pas dans le détail de fonctionnement au pas à pas des éléments du coprocesseur, celui-ci ne posant pas de problème à l'homme du métier connaissant le document D2.

On notera que dans la méthode ci-dessous, on n'utilise pas le circuit d'addition 51.

On réalise donc au mieux A * B + C à l'aide des ressources du coprocesseur.

La méthode est la suivante :

1.1 - Multiplication de B par la première sous-opérande de A :

1 - calcul de A[0] * B[0] + 0 . Le résultat est de la forme $R[1]_0 R[0]_0$ avec $R[1]_0$ et $R[0]_0$ des données binaires codées sur n bits. Sortie de $R[0]_0 = X[0]$ du registre 12 et stockage de celle-ci dans une mémoire (par exemple la mémoire 3 du circuit 1).

2 - calcul de A[0] * B[1] + $R[1]_0$ . Le résultat est de la forme $R[1]_1 R[0]_1$ avec $R[1]_1$ et $R[0]_1$ des données binaires codées sur n bits. Sortie de $R[0]_1 = X[1]$ du registre 12 et stockage de celle-ci dans une mémoire.

.

.

Q - calcul de A[0] * B[q-1] + $R[1]_{q-2}$ . Le résultat est de la forme $R[1]_{q-1} R[0]_{q-1}$ avec $R[1]_{q-1}$ et $R[0]_{q-1}$ des données binaires codées sur n bits. Sortie de $R[1]_{q-1} = X[q]$ et $R[0]_{q-1} = X[q-1]$ des registres 11 et 12 et stockage de celles-ci dans une mémoire.

Le résultat de la multiplication est la donnée X [q] X[q-1] ... X[1] X[0].

1.2 - Calcul du résultat d'une multiplication :

X[0] * J[0] = Y , avec Y de la forme Y[1] Y[0], Y étant une donnée binaire codée sur 2 * n bits, sortie et mémorisation de Y[0]

1.3 - Calcul du résultat de la multiplication de la première sous-opérande de Y par la donnée N :

1 - calcul de Y[0] * N[0] + X[0]. Le résultat est de la forme $T[1]_0 \, T[0]_0$ avec $T[1]_0$ et $T[0]_0$ des données binaires codées sur n bits. Sortie de $T[0]_0 = U[0]$ du registre 12 et stockage de celle-ci dans une mémoire.

2 - calcul de $Y[0] * N[1] + T[1]_0$. Le résultat est de la forme $T[1]_1 \, T[0]_1$ avec $T[1]_1$ et $T[0]_1$ des données binaires codées sur n bits. Sortie de $T[0]_1 = U[1]$ du registre 12 et stockage de celle-ci dans une mémoire.

.

.

Q - calcul de $Y[0] * N[q-1] + T[1]_{q-2}$. Le résultat est de la forme $T[1]_{q-1} \, T[0]_{q-1}$ avec $T[1]_{q-1}$ et $T[0]_{q-1}$ des données binaires codées sur n bits. Sortie de $T[1]_{q-1} = U[q]$ et $T[0]_{q-1} = U[q-1]$ des registres 11 et 12 et stockage de celles-ci dans une mémoire.

Le résultat de la multiplication est la donnée U [q] U[q-1] ... U[1] U[0].

1.4 - Calcul du résultat de la multiplication modulaire de B par la première sous-opérande de A :

- calcul de U + X et stockage du résultat, noté Z.

Le résultat Z de l'addition est de la forme (c) Z [q] Z[q-1] ... Z[1] Z[0].

- stockage de $S1 = Z/2^k$ (N ou 0).

2 - Reprise des étapes 1.1 à 1.4 en considérant la deuxième sous-opérande de A en modifiant l'étape 1.1 tel que ci-dessous :

1 - calcul de A[1] * B[0]. Le résultat est de la forme $R[1]_0 \, R[0]_0$ avec $R[1]_0$ et $R[0]_0$ des données binaires codées sur n bits. Sortie de $R[0]_0 = W[0]$ du registre 12 et stockage de celle-ci dans une mémoire (par exemple la mémoire 3 du circuit 1).

2 - calcul de $A[1] * B[1] + R[1]_0$. Le résultat est de la forme $R[1]_1 \, R[0]_1$ avec $R[1]_1$ et $R[0]_1$ des données binaires codées sur n bits. Sortie de $R[0]_1 = W[1]$ du registre 12 et stockage de celle-ci dans une mémoire.

.

.

Q - calcul de $A[1] * B[q-1] + R[1]_{q-2}$. Le résultat est de la forme $R[1]_{q-1} \, R[0]_{q-1}$ avec $R[1]_{q-1}$ et $R[0]_{q-1}$ des données binaires codées sur n bits. Sortie de $R[1]_{q-1} = W[q]$ et $R[0]_{q-1} = W[q-1]$ des registres 11 et 12 et stockage de celles-ci dans une mémoire.

Calcul de W + S1 qui donne alors le résultat de la multiplication X avec X de la forme X[q] X[q-1] ... X[1] X[0].

Q - Reprises de l'étape 2 ci-dessus en considérant la q-ième sous-opérande de A.

Le résultat final du calcul est Sq - (N ou 0).

Gain en temps de calcul.

Le temps de calcul est mesuré en nombre de cycles d'horloge du coprocesseur.

La multiplication du contenu du registre 10 par les contenus des registres 16 et 17 nécessite (n + 2 . k) cycles (en ne tenant pas compte du chargement des registres et de l'initialisation du dispositif). On considérera par ailleurs que les additions sont réalisées à l'aide d'un additionneur série dont le fonctionnement est cadencé par l'horloge du coprocesseur. Une addition nécessite alors n cycles.

- Méthode selon l'état de la technique.

Calcul des $A_i * B : q . [q . m . (n + 2 . k)] = n . q^2 . (m + 2)$
Calcul des $W : q . q . n = n . q^2$
Calcul des $X : (q - 1) . (q + 1) . n = n . (q^2 - 1)$
Calcul des $Y : q . m . (n + 2 . k) = n . q . (m + 2)$
Calcul des $T : q . [q . m . (n + 2 . k)] = n . q^2 . (m + 2)$
Calcul des $U : q . q . n = n . q^2$
Calcul des $Z : q . (q + 1) . n = n . (q^2 + q)$

Le nombre de cycles nécessaires pour réaliser les calculs est donné par la formule suivante : $2 . n . (m + 4) . q^2 + n . (m + 3) . q - n$ .

- Méthode en utilisant l'invention.

Calcul des $A * B + R : q . [q . m/2 . (n + k)] = n/2 . (m + 1) . q^2$
Calcul des $X : (q - 1) . (q + 1) . n = n . q^2 - n$
Calcul des $Y : q . m/2 . (n + k) = n/2 . (m + 1) . q$
Calcul des $T : q . [q . m/2 . (n + k)] = n/2 . (m + 1) . q^2$
Calcul des $Z : q . (q + 1) . n = n . q^2 + n . q$

Le nombre de cycles nécessaires pour réaliser les calculs est donné par la formule suivante : $n/2 . (2m$

+ 4) . $q^2$ + n/2 . (m + 3) . q - n .

Considérons q = 3 et k = 32.

Pour m = 8 ( n = 256), le premier procédé nécessite 63 488 cycles et le deuxième procédé nécessite 27 136 cycles, soit un gain de 57.26 %.

Pour m = 16 (n = 512), le premier procédé nécessite 212 992 cycles et le deuxième procédé nécessite 97 024 cycles, soit un gain de 54.45 %.

On remarquera que ces calculs ne tiennent pas compte des échanges de données entre le coprocesseur et l'extérieur, ces échanges étant beaucoup plus nombreux dans la mise en oeuvre de la première méthode. Le temps nécessaire pour effectuer ces échanges dépend de la fréquence d'horloge utilisée pour cadencer le fonctionnement des éléments extérieurs (tels que la processeur de traitement 2, la mémoire 3 et le bus de communication 5 du circuit 1), cette fréquence étant en pratique généralement inférieure à la fréquence de l'horloge du coprocesseur.

La capacité du coprocesseur selon l'invention à mettre en oeuvre des opérations du type A * B + C présente également d'autres avantages, par exemple pour la mise en oeuvre de la méthode de cryptage RSA.

### Méthode RSA.

La méthode de cryptage RSA nécessite de faire des calculs de type C = $M^D$ mod N avec M un message à crypter ou à décrypter, N un modulo tel que N = P * Q , avec P et Q des nombres entiers premiers, et D tel que D * E = mod ((P - 1) * (Q - 1)) , avec E connu.

Un algorithme pour réaliser ce calcul est le suivant :

$$A = (M \bmod P)^{D \bmod (P - 1)} \bmod P$$

$$B = (M \bmod Q)^{D \bmod (Q - 1)} \bmod Q$$

$$U = Q^{-1} \bmod P$$

Si A < B mod P alors

$$C = (((A + P - (B \bmod P)) * U) \bmod P) * Q + B$$

Sinon

$$C = (((A - (B \bmod P)) * U) \bmod P) * Q + B.$$

L'invention permet de calculer C qui est de la forme X * Q + B , en chargeant B dans le registre 11. On remarquera à ce propos qu'il est particulièrement intéressant de prévoir un multiplexeur 14 ayant une entrée reliée à une borne d'entrée du circuit. En effet, dans la méthode exposée ci-dessus traitant de la multiplication pour des données de taille supérieure à celle des registres, le contenu du registre 11 est produit à l'intérieur du circuit. Une borne d'entrée n'est donc pas utilisée dans ce cas pour charger le contenu du registre 11. Si on souhaite calculer A * B + C , avec C quelconque, il doit être possible de rentrer la donnée C dans le registre 11 en reliant une entrée du multiplexeur à une borne d'entrée.

### 4. Opérations modulaire sur des données de taille supérieure à n : exemple 2.

Dans cet exemple, on utilise le circuit d'addition 51.

On réalise A * B + C + D .

On considérera, de même que précédemment, que les opérandes A, B et N sont sous la forme de q sous-opérandes de n bits : A[q-1] A[q-2] ... A[0], B[q-1] B[q-2] ... B[0], N[q-1] N[q- 2] ... N[0 ].

La méthode est la suivante :

1.1 - Multiplication de B par la première sous-opérande de A :

1 - calcul de A[0] * B[0] + 0 + 0 . Le résultat est de la forme $R[1]_0$ $R[0]_0$ avec $R[1]_0$ et $R[0]_0$ des données binaires codées sur n bits. Sortie de $R[0]_0$ = X[0] du registre 12 et stockage de celle-ci dans une mémoire (par exemple la mémoire 3 du circuit 1).

2 - calcul de A[0] * B[1] + $R[1]_0$ + 0 . Le résultat est de la forme $R[1]_1$ $R[0]_1$ avec $R[1]_1$ et $R[0]_1$ des données binaires codées sur n bits. Sortie de $R[0]_1$ = X[1] du registre 12 et stockage de celle-ci dans une mémoire.

.

.

Q - calcul de A[0] * B[q-1] + $R[1]_{q-2}$ + 0 . Le résultat est de la forme $R[1]_{q-1}$ $R[0]_{q-1}$ avec $R[1]_{q-1}$ et $R[0]_{q-1}$ des données binaires codées sur n bits. Sortie de $R[1]_{q-1}$ = X[q] et $R[0]_{q-1}$ = X[q-1] des registres 11 et 12 et stockage de celles-ci dans une mémoire.

Le résultat de la multiplication est la donnée X[q] X[q-1] ... X[1] X[0].

1.2 - Calcul du résultat d'une multiplication :

X[0] * J[0] = Y , avec Y de la forme Y[1] Y[0], Y étant une donnée codée sur 2 * n bits, sortie et mémorisation de Y[0]

1.3 - Calcul du résultat de la multiplication de la première sous-opérande de Y par la donnée N :

1 - calcul de Y[0] * N[0] + X[0] + 0 . Le résultat est de la forme $T[1]_0$ $T[0]_0$ avec $T[1]_0$ et $T[0]_0$ des données binaires codées sur n bits. Sortie de $T[0]_0$ = Z[0] du registre 12 et stockage de celle-ci dans une mémoire.

2 - calcul de $Y[0] * N[1] + X[1] + T[1]_0$. Le résultat est de la forme $T[1]_1 \, T[0]_1$ avec $T[1]_1$ et $T[0]_1$ des données binaires codées sur n bits. Sortie de $T[0]_1 = Z[1]$ du registre 12 et stockage de celle-ci dans une mémoire.

.

.

.

Q - calcul de $Y[0] * N[q-1] + X[q-1] + T[1]_{q-2}$. Le résultat est de la forme $T[1]_{q-1} \, T[0]_{q-1}$ avec $T[1]_{q-1}$ et $T[0]_{q-1}$ des données binaires codées sur n bits. Sortie de $T[1]_{q-1}$ et $T[0]_{q-1} = Z[q-1]$ des registres 11 et 12 et stockage de cette dernière dans une mémoire.

Calcul de $X[q] + T[1]_{q-1} = Z[q]$.

Le résultat Z de la multiplication est la donnée $Z[q] \, Z[q-1] \ldots Z[1] \, Z[0]$.

Stockage de $S1 = Z/2^k - (N\ ou\ 0) = S1[q] \, S1[q-1] \ldots S1[1] \, S1[0]$.

<u>2 - Reprise des étapes 1.1 à 1.3 en considérant la deuxième sous-opérande de A en modifiant l'étape 1.1 tel que ci-dessous :</u>

1 - calcul de $A[1] * B[0] + S1[0] + 0$. Le résultat est de la forme $R[1]_0 \, R[0]_0$ avec $R[1]_0$ et $R[0]_0$ des données binaires codées sur n bits. Sortie de $R[0]_0 = X[0]$ du registre 12 et stockage de celle-ci dans une mémoire (par exemple la mémoire 3 du circuit 1).

2 - calcul de $A[1] * B[1] + S1[1] + R[1]_0$. Le résultat est de la forme $R[1]_1 \, R[0]_1$ avec $R[1]_1$ et $R[0]_1$ des données binaires codées sur n bits. Sortie de $R[0]_1 = X[1]$ du registre 12 et stockage de celle-ci dans une mémoire.

.

.

Q - calcul de $A[1] * B[q-1] + S1[q-1] + R[1]_{q-2}$. Le résultat est de la forme $R[1]_{q-1} \, R[0]_{q-1}$ avec $R[1]_{q-1}$ et $R[0]_{q-1}$ des données binaires codées sur n bits. Sortie de $R[1]_{q-1}$ et $R[0]_{q-1} = X[q-1]$ des registres 11 et 12 et stockage de cette dernière dans une mémoire.

Calcul de $X[q] = R[1]_{q-1} + S1[q]$ qui donne alors le résultat de la multiplication X avec X de la forme $X[q] \, X[q-1] \ldots X[1] \, X[0]$.

.

.

.

<u>Q - Reprises de l'étape 2 ci-dessus en considérant la q-ième sous-opérande de A.</u>

Le résultat final du calcul est $Sq - (N\ ou\ 0)$.

<u>Gain en temps de calcul.</u>

Le temps de calcul est mesuré en nombre de cycles d'horloge du coprocesseur.

La multiplication du contenu du registre 10 par les contenus des registres 16 et 17 nécessite $(n + 2, k)$ cycles (en ne tenant pas compte du chargement des registres et de l'initialisation du circuit). On considérera par ailleurs que les additions sont réalisées à l'aide d'un additionneur série dont le fonctionnement est cadencé par l'horloge du coprocesseur. Une addition nécessite alors n cycles.

Calcul des $A * B + R + S : q \cdot [q \cdot m/2 \cdot (n + k)] = n/2 \cdot q^2 \cdot (m + 1)$

Calcul des $X_i : (q - 1) \cdot n = n \cdot q - n$

Calcul des $Y : q \cdot m/2 \cdot (n + k) = n/2 \cdot q \cdot (m + 1)$

Calcul des $Y * N + T + X : q \cdot [q \cdot m/2 \cdot (n + k)] = n/2 \cdot q^2 \cdot (m + 1)$

Calcul des $Z_q : q \cdot n = n \cdot q$

Le nombre de cycles nécessaires pour réaliser les calculs est donné par la formule suivante : $n \cdot (m + 1) \cdot q^2 + n/2 \cdot (m + 5) \cdot q - n$.

Considérons $q = 3$ et $k = 32$.

Pour $m = 8$ ( $n = 256$), le procédé nécessite 25 472 cycles, soit un gain de 59.88 %.

Pour $m = 16$ ($n = 512$), le procédé nécessite 90 880 cycles, soit un gain de 57.33 %.

On remarquera que ces calculs ne tiennent pas compte des échanges de données entre le coprocesseur et l'extérieur, ces échanges étant beaucoup plus nombreux dans la mise en oeuvre de la première méthode. Le temps nécessaire pour effectuer ces échanges dépend de la fréquence d'horloge utilisée pour cadencer le fonctionnement des éléments extérieurs (tels que la processeur de traitement 2, la mémoire 3 et le bus de communication 5 du circuit 1), cette fréquence étant en pratique généralement inférieure à la fréquence de l'horloge du coprocesseur.

**Revendications**

**1.** Dispositif pour effectuer une opération A * B ou une opération A * B + C + D, A, B, C et D étant des données binaires codés sur m mots de k bits, m et k étant des entiers, et m étant pair, le dispositif (4b) comprenant :

- un premier registre (10) à décalage de m * k bits pour contenir B,
- un deuxième registre (11) à décalage de m * k bits pour contenir une partie du résultat actualisé de l'opération et éventuellement C ou D,
- un troisième et un quatrième registres (16, 17) à décalage de k bits ayant une entrée série et une sortie parallèle pour contenir de manière successive des mots pairs et impairs de A,

- un cinquième registre (12) à décalage de m * k bits pour contenir une partie du résultat actualisé de l'opération et éventuellement C ou D,
- au moins une borne d'entrée (42, 43, 44, 45, 47) pour recevoir des données binaires à stocker dans ces registres,
- un premier circuit de multiplication (19) permettant de réaliser une opération de multiplication entre deux données stockées dans les premier et troisième registres (10, 16),
- un premier circuit d'addition (30) permettant de réaliser des opérations d'addition entre une donnée stockée dans le deuxième registre (11) et une donnée produite par le premier circuit de multiplication (19),

caractérisé en ce qu'il comporte :

- un deuxième circuit de multiplication (20) permettant de réaliser une opération de multiplication entre deux données stockées dans les premier et quatrième registres (10, 17) parallèlement à l'opération de multiplication réalisée par le premier circuit de multiplication (19) entre les deux données stockées dans les premier et troisième registres (10, 16),
- un deuxième circuit d'addition (31) permettant de réaliser une opération d'addition entre une donnée produite par le premier circuit d'addition (30) et une donnée fournie au deuxième circuit d'addition par le deuxième circuit de multiplication (20),
- une première cellule à retard (54) pour retarder de k temps de cycle la fourniture au deuxième circuit d'addition (31) de la donnée fournie par le deuxième circuit de multiplication (20),
- des moyens (50, 48, 56, 53) de multiplexage permettant de fournir sélectivement à des entrées du premier circuit d'addition (30) le contenu du deuxième registre (11) ou un état logique permanent, de relier une entrée du deuxième circuit de multiplication (20) à une sortie du premier registre (10), de relier la sortie du premier circuit de multiplication (19) à l'un des registres (12), et de fournir au deuxième circuit d'addition (31) une donnée produite par le premier circuit d'addition (30) ou un état logique permanent.

2. Dispositif selon la revendication 1, caractérisé en ce que les moyens de multiplexage comprennent un premier multiplexeur (50) comprenant deux entrées série et une sortie série, une première entrée dudit multiplexeur étant reliée à une sortie du deuxième registre (11), une deuxième entrée du multiplexeur recevant un état logique permanent et la sortie du multiplexeur étant reliée à une entrée du premier circuit d'addition (30).

3. Dispositif selon la revendication 2, comprenant en outre un circuit de soustraction (28) placé entre le deuxième registre (11) et le premier circuit d'addition (30) permettant de réaliser une opération de soustraction entre une donnée stockée dans le deuxième registre (11) et une donnée stockée dans le cinquième registre (12), caractérisé en ce que le premier multiplexeur (50) comprend une troisième entrée série, ledit multiplexeur étant placé entre le circuit de soustraction et le premier circuit d'addition et la troisième entrée dudit multiplexeur étant reliée à une sortie du circuit de soustraction (28).

4. Dispositif selon l'une des revendications 1 à 3, caractérisé en ce qu'il comprend en outre un troisième circuit d'addition (51), monté en série avec le premier circuit d'addition (30) et permettant de réaliser des opérations d'addition entre des données stockées dans les deuxième et cinquième registres (11, 12) et une donnée produite par le premier circuit de multiplication (19), et des moyens (52) de multiplexage permettant de fournir sélectivement à une entrée du troisième circuit d'addition (51) le contenu du cinquième registre (12) ou un état logique permanent.

5. Dispositif selon la revendication 4, caractérisé en ce que les moyens de multiplexage comprennent un deuxième multiplexeur (56) ayant une première entrée, cette première entrée permettant de relier la sortie du premier ou du troisième circuit d'addition (30, 51) à l'un des registres pour stocker tout ou partie des données produites par addition entre des données stockées dans les deuxième et cinquième registres (11, 12) et une donnée produite par le premier circuit de multiplication (19).

6. Dispositif selon la revendication 5, caractérisé en ce que le deuxième multiplexeur (56) comprend une deuxième entrée reliée à la sortie du deuxième circuit d'addition pour stocker dans l'un ou plusieurs des registres des données produites par ce deuxième circuit de multiplication.

7. Dispositif selon l'une des revendications 1 à 6, les troisième et quatrième registres étant utilisés pour fournir des données aux premier et deuxième circuits de multiplication (19, 20) caractérisé en ce qu'il comprend des moyens pour relier la sortie de l'un des deuxième ou cinquième registres (11, 12) à des entrées de ces troisième et quatrième registres.

8. Dispositif selon l'une des revendications 1 à 6, caractérisé en ce qu'il comprend un sixième registre (40) à entrée série et sortie série et des moyens de multiplexage (24, 46) pour relier la sortie de ce sixième registre à des entrées des troisième et quatrième registres (16, 17).

9. Dispositif selon la revendication 8 caractérisé en ce qu'il comprend un troisième multiplexeur (46) pour relier sélectivement l'entrée du troisième registre (16) à la sortie du sixième registre (40) ou à une borne d'entrée (47).

10. Dispositif selon l'une des revendications 8 ou 9, caractérisé en ce qu'il comprend un quatrième multiplexeur (41) comprenant deux entrées et une sortie, une première entrée du quatrième multiplexeur (41) étant reliée à une borne d'entrée (42) pour recevoir des données de l'extérieur du dispositif, une deuxième entrée du quatrième multiplexeur (41) étant reliée à la sortie du sixième registre (40) pour réintroduire dans ledit registre les données qui sont fournies sur sa sortie.

11. Dispositif selon l'une des revendications 1 à 10, caractérisé en ce qu'il comprend en outre une deuxième cellule à retard (34) placée entre une sortie du premier circuit d'addition (30) et une entrée du deuxième circuit d'addition (31), et en ce qu'il comprend des moyens de multiplexage (53) pour relier directement lesdits premier et deuxième circuits d'addition (30, 31), évitant ainsi d'introduire un retard entre lesdits circuits.

12. Dispositif (1) comprenant un processeur (2), une mémoire (3), un bus de communication (5) et un dispositif (4) défini selon l'une des revendications 1 à 11.

13. Procédé de mise en oeuvre d'une multiplication A * B non modulaire, A et B étant des données binaires codées sur m * k bits, m et k étant des entiers, ces données étant subdivisées en m mots de k bits A = $A_{m-1}$ ... $A_0$ et B = $B_{m-1}$ ... $B_0$ , m étant pair, caractérisé en ce qu'il comporte les étapes de:

- chargement de la donnée B dans un premier registre (10) à décalage de m * k bits,
- chargements successifs des mots de A d'indice pair dans un troisième registre (16) à décalage de k bits à entrée série et sortie parallèle,
- chargements successifs des mots de A d'indice impair dans un quatrième registre (17) à décalage de k bits à entrée série et sortie parallèle,
- réalisations successives dans des premier et deuxième multiplieurs (19 et 20), par décalage simultané du premier registre (10) et d'un deuxième registre (11) de m * k bits destiné à contenir une partie du résultat actualisé de l'opération, des multiplications de B par les mots d'indice pair et les mots d'indice impair de A,

- additions successives, dans un premier circuit d'addition (30), de zéros logiques ou du contenu du deuxième registre (ll) avec le résultat fourni par le premier circuit de multiplication (19),
- additions successives, dans un deuxième circuit d'addition (31), d'une part de m * k bits produits par le premier circuit de multiplication (19) ou par le premier circuit d'addition (30), les m * k bits étant complétés de k zéros, et d'autre part de (m + 1) *k bits produits par le deuxième circuit de multiplication (20), la donnée produite par le deuxième circuit de multiplication (20) étant retardée de k temps de cycle, stockages successifs, dans un cinquième registre (12) à décalage de m * k bits, des k premiers bits produits par le premier circuit de multiplication (19) et des k premiers bits produits par le deuxième circuit d'addition (31) lors de chaque décalage,
- stockages successifs des m * k bits de poids fort obtenus lors de chaque décalage dans le deuxième registre (11).

14. Procédé selon la revendication 13, caractérisé en ce qu'il comprend les étapes suivantes dans l'ordre indiqué:

1 - Initialisation.

- chargement des données A et B dans un sixième et le premier registres (40, 10) de m * k bits, à entrée et sortie série, et chargement des mots $A_0$ et $A_1$ dans les troisième et quatrième registres (16, 17),
- initialisation des premier et deuxième circuits d'addition (30, 31) et des premier et deuxième circuits de multiplication (19, 20),
- sélection d'une deuxième entrée d'un premier multiplexeur (50), de sorte qu'il fournisse en permanence des zéros logiques à une première entrée série du premier circuit d'addition (30),
- sélection d'une entrée d'un cinquième multiplexeur (55), de sorte que les données produites par le deuxième circuit de multiplication (20) soient fournies avec un retard de k coups d'horloge à une entrée série du deuxième circuit d'addition (31),
- sélection d'entrées d'un sixième et d'un septième multiplexeurs (25, 48) de sorte à relier une sortie du premier registre (10) à des entrées série des premier et deuxième circuits de multiplication (19, 20).

2 - mise en oeuvre d'une boucle de calcul avec i indice variant de 1 à m/2.
2.1 - itération 1.

- chargement des contenus des troisième et quatrième registres (16, 17) dans des septième et huitième registres (21, 22) de k bits, à entrée et sortie parallèle, ces sorties étant reliées à des entrées parallèles des premier et deuxième circuits de multiplication (19, 20),
- réalisation, par décalage à droite simultané des contenus du premier registre (10) et du deuxième registre (11) de m * k bits à entrée et sortie série, des multiplications des mots $A_1$ et $A_0$ par la donnée B, les données produites par les premier et deuxième circuits de multiplication (19, 20) étant codées sur (m + 1) * k bits,
- addition, dans le premier circuit d'addition (30), des bits produits par le premier circuit de multiplication (19) avec les bits fournis par le premier multiplexeur (50),
- stockage des k premiers bits produits par le premier circuit de multiplication (19) dans le cinquième registre (12) de m * k bits à entrée et sortie série,
- addition, dans le deuxième circuit d'addition (31), des (m + 1) * k bits produits par le deuxième circuit de multiplication (20) avec les m * k bits de poids fort produits par le premier circuit de multiplication (19), ces bits étant complétés par k zéros,
- stockage dans le cinquième registre (12) des k premiers bits produits par le deuxième circuit d'addition (31) et stockage dans le deuxième registre (11) des m * k bits suivants,
- lors des opérations ci-dessus, transfert des mots $A_3$ et $A_2$ dans les troisième et quatrième registres (16, 17),
- sélection d'une première entrée du premier multiplexeur (50), afin de relier la sortie du deuxième registre (11) à la première entrée du premier circuit d'addition (30).

2.j - itération j, j variant de 2 à m/2 - 1.

- chargement des contenus des troisième et quatrième registres (16, 17) dans les septième et huitième registres (21, 22),
- réalisation, par décalage à droite simultané des contenus des premier et deuxième registres (10, 11), des multiplications des mots $A_{2j-1}$ et de $A_{2j-2}$ par la donnée B,
- addition, dans le premier circuit d'addition (30), des bits produits par le premier circuit de multiplication (19) avec le contenu du deuxième registre (11),
- stockage des k premiers bits produits par le premier circuit d'addition (30) dans le cinquième registre (12),

- addition, dans le deuxième circuit d'addition (31), des (m + 1) * k bits produits par le deuxième circuit de multiplication (20) avec les m * k bits de poids fort produits par le premier circuit d'addition (30) complétés de k zéros pour assurer une taille identique des données additionnées,
- stockage dans le cinquième registre (12) des k premiers bits produits par le deuxième circuit d'addition (31) et stockage dans le deuxième registre (11) des m * k bits suivants,
- lors des opérations ci-dessus, transfert des mots $A_{2j+1}$ et $A_{2j}$ dans les troisième et quatrième registres (16, 17).

2.m/2 - itération m/2.

Reprise de l'étape 2.j, hormis le transfert de mots du sixième registre (40) dans les troisième et quatrième registres (16, 17), les m * k bits de poids faible du résultat étant dans le cinquième registre (12) et les m * k bits de poids fort du résultat étant dans le deuxième registre (11) à la fin de cette itération.

**Patentansprüche**

1. Vorrichtung zum Ausführen einer Operation A*B oder einer Operation A*B+C+D, wobei A, B, C und D binäre, auf m Wörtern von k Bits codierte Größen sind, wobei m und k ganzzahlig sind und m gerade ist, wobei die Vorrichtung (4b) aufweist:

- ein erstes Schieberegister (10) mit m*k Bits, das B enthält,
- ein zweites Schieberegister mit m*k Bits, das einen Teil des aktualisierten Ergebnisses der Operation und eventuell C oder D enthält,
- ein drittes und ein viertes Schieberegister (16, 17) mit k Bits mit einem seriellen Eingang und einem parallelen Ausgang, die nacheinander gerade und ungerade Wörter von A enthalten,
- ein fünftes Schieberegister (12) mit m*k Bits, das einen Teil des aktualisierten Ergebnisses der Operation und eventuell C oder D enthält,
- mindestens einen Eingangsanschluß (42, 43, 44, 45, 47), der die in diesen Registern zu speichernde binären Größen erhält,
- eine erste Multiplikatorschaltung (19) zur Durchführung einer Multiplikatoroperation zwischen zwei in den ersten und dritten Registern (10, 16) gespeicherten Größen,
- eine erste Additionsschaltung (30) zur Durchführung von Additionsoperationen zwischen einer in dem zweiten Register (11) gespeicherten Größe und einer durch die erste Multiplikatorschaltung (19) erzeugten Größe,

dadurch gekennzeichnet, daß die Vorrichtung aufweist:

- eine zweite Multiplikatorschaltung (20) zur Durchführung einer Multiplikatoroperation zwischen zwei in den ersten und vierten Registern (10, 17) gespeicherten Größen parallel zur in der ersten Multiplikatorschaltung (19) durchgeführten Multiplikatoroperation zwischen den in den ersten und dritten Registern (10, 16) gespeicherten Größen,

- eine dritte Additionsschaltung (31) zur Durchführung einer Additionsoperation zwischen einer in der ersten Additionsschaltung (30) und einer Größe, die der zweiten Additionsschaltung durch die zweite Multiplikatorschaltung (20) geliefert wird,

- eine erste Verzögerungszelle (54), die das Liefern der von der zweiten Multiplikatorschaltung (20) gelieferten Größe an die zweite Additionsschaltung (31) um k Taktzyklen verzögert,

- Multiplexvorrichtungen (50, 48, 56, 53), die den Inhalt des zweiten Registers (11) oder einen durchgehend logischen Zustand selektiv an Eingänge der ersten-Additionsschaltung (30) liefern, die einen Eingang der zweiten Multiplikatorschaltung (20) mit einem Ausgang des ersten Registers (10) verbinden, den Ausgang der ersten Multiplikatorschaltung (19) mit einem der Register verbinden, und die der zweiten Additionsschaltung (31) eine durch die erste Additionsschaltung (30) erzeugte Größe oder einen durchgehend logischen Zustand liefern.

2. Vorrichtung nach Anspruch 1, dadurch gekennzeichnet, daß die Multiplexeinrichtungen einen ersten Multiplexer (50) aufweisen, der zwei serielle Eingänge und einen seriellen Ausgang aufweist, wobei ein erster Eingang des Multiplexers an einen Ausgang des zweiten Registers (11) angeschlossen ist, ein zweiter Eingang des Multiplexers einen durchgehend logischen Zustand empfängt und der Ausgang des Multiplexers an einen Eingang der ersten Additionsschaltung (30) angeschlossen ist.

3. Vorrichtung nach Anspruch 2, die darüber hinaus eine Subtraktionsschaltung (28) aufweist, die zwischen dem zweiten Register (11) und der ersten Additionsschaltung (30) angeordnet ist, die die Durchführung einer Subtraktionsoperation zwischen einer in dem zweiten Register (11) gespeicherten Größe und einer in dem fünften Register (12) gespeicherten Größe ermöglicht, dadurch gekennzeichnet, daß der erste Multiplexer (50) einen dritten seriellen Eingang aufweist, wobei der Multiplexer zwischen der Subtraktionsschaltung und der ersten Additionsschaltung angeordnet ist und der dritte Eingang des Multiplexers an einen Ausgang der Subtraktionsschaltung (28) angeschlossen ist.

4. Vorrichtung nach einem der Ansprüche 1 bis 3, dadurch gekennzeichnet, daß sie darüber hinaus eine dritte Additionsschaltung (51) aufweist, die seriell zur ersten Additionsschaltung (30) angeordnet ist und die die Durchführung von Additionsoperationen zwischen den in den zweiten und fünften Registern (11, 12) gespeicherten Größen und einer Größe ermöglicht, die durch die erste Multiplikatorschaltung (19) erzeugt wurde, und eine Multiplexeinrichtung (52), die den Inhalt des fünften Registers (12) oder einen durchgehend logischen Zustand an einen Eingang der dritten Additionsschaltung (51) liefern kann.

5. Vorrichtung nach Anspruch 4, dadurch gekennzeichnet, daß die Multiplexeinrichtung einen zweiten Multiplexer (56) mit einem ersten Eingang aufweist, mit dem der Ausgang der ersten oder der dritten Additionsschaltung (30, 51) an eines der Register angeschlossen werden kann, um die gesamten oder einen Teil der durch die Addition zwischen den in den zweiten und fünften Registern und einer durch die erste Multiplikatorschaltung (19) erzeugten Größen zu speichern.

6. Vorrichtung nach Anspruch 5, dadurch gekennzeichnet, daß der zweite Multiplexer (56) einen zweiten Eingang aufweist, der an den Ausgang der zweiten Additionsschaltung angeschlossen ist, und der in einem oder mehreren Registern die durch die zweite Multiplikatorschaltung erzeugten Größen speichert.

7. Vorrichtung nach einem der Ansprüche 1 bis 6, wobei die dritten und vierten Register verwendet werden, um der ersten und zweiten Multiplikatorschaltung (19, 20) Größen zu liefern, dadurch gekennzeichnet, daß sie eine Einrichtung aufweist, die den Ausgang von einem der zweiten oder fünften Register (11, 12) an die Eingänge der dritten und vierten Register anschließt.

8. Vorrichtung nach einem der Ansprüche 1 bis 6, dadurch gekennzeichnet, daß sie ein sechstes Register mit einem seriellen Eingang und einem seriellen Ausgang und Multiplexeinrichtungen (24, 46) aufweist, die den Ausgang des sechsten Registers an die Eingänge der dritten und vierten Register (16, 17) anschließen.

9. Vorrichtung nach Anspruch 8, dadurch gekennzeichnet, daß sie einen dritten Multiplexer (46) aufweist, der den Eingang des dritten Registers (16) selektiv an den Ausgang des sechsten Registers (40) oder einen Eingangsanschluß (47) anschließt.

**10.** Vorrichtung nach einem der Ansprüche 8 oder 9, dadurch gekennzeichnet, daß sie einen vierten Multiplexer (41) mit zwei Eingängen und einem Ausgang aufweist, wobei ein erster Eingang des vierten Multiplexers (41) an einen Eingangsanschluß (42) angeschlossen ist, der Größen von außerhalb der Vorrichtung empfängt, wobei ein zweiter Eingang des vierten Multiplexers (41) an den Ausgang des sechsten Registers (40) angeschlossen ist, der die an seinem Ausgang gelieferten Größen wieder in dieses Register einführt.

**11.** Vorrichtung nach einem der Ansprüche 1 bis 10, dadurch gekennzeichnet, daß sie weiterhin eine zweite Verzögerungszelle (34) aufweist, die zwischen einem Ausgang der ersten Additionsschaltung (30) und einem Eingang der zweiten Additionsschaltung (31) angeschlossen ist, und daß sie eine Multiplexeinrichtung (53) aufweist, die die ersten und zweiten Additionsschaltungen (30, 31) direkt miteinander verbindet, wodurch eine Verzögerung zwischen diesen Schaltungen vermieden wird.

**12.** Vorrichtung (1) mit einem Koprozessor (2), einem Speicher (3), einem Kommunikationsbus (5) und einer nach den Ansprüchen 1 bis 11 definierten Vorrichtung (4).

**13.** Verfahren zum Durchführen einer nichtmodularen Multiplikation A*B, wobei A und B binäre, auf m*k Bits codierte Größen sind, wobei m+k ganzzahlig sind, die Größen in m Wörtern von k Bits untergliedert sind, mit $A = A_{m-1} ... A_0$ und $B = B_{m-1} ... B_0$, wobei m gerade ist, gekennzeichnet durch die folgenden Schritte:

- Laden der Größe B in ein erstes Schieberegister (10) mit m*k Bits,
- aufeinanderfolgendes Laden der Wörter von A mit geradem Index in ein drittes Schieberegister (16) mit k Bits mit seriellem Eingang und parallelem Ausgang,
- aufeinanderfolgendes Laden der Wörter von A mit ungeradem Index in ein viertes Schieberegister (17) mit k Bits und seriellem Eingang und parallelem Ausgang,
- aufeinanderfolgende Ausführung der Multiplikationen von B mit den Wörtern mit geradem Index und den Wörtern mit ungeradem Index von A, in ersten und zweiten Multiplikatoren (19, 20) durch die gleichzeitige Verschiebung des ersten Registers (10) und des zweiten Registers (11) mit m*k Bits, das einen Teil des aktualisierten Ergebnisses der Operation enthalten soll,
- aufeinanderfolgende Additionen von logischen Nullen oder des Inhalts des zweiten Registers (11) mit dem durch die erste Multiplikatorschaltung (19) gelieferten Ergebnis in einer ersten Additionsschaltung (30),
- aufeinanderfolgende Additionen einerseits der m*k Bits, die durch die erste Multiplikatorschaltung (19) oder durch die erste Additionsschaltung (30) erzeugt werden in einer zweiten Additionsschaltung (31), wobei die m*k Bits mit k Nullen vervollständigt werden, und andererseits der durch die zweite Multiplikatorschaltung (20) erzeugten (m+1)*k Bits, wobei die durch die zweite Multiplikatorschaltung (20) erzeugte Größe um k Taktzyklen verzögert wird, aufeinanderfolgendes Speichern der k ersten durch die erste Multiplikatorschaltung (19) erzeugten Bits und der k ersten durch die zweite Additionsschaltung (31) erzeugten Bits während jeder Verschiebung in einem fünften Schieberegister (12) mit m*k Bits,
- aufeinanderfolgendes Speichern der m*k Bits mit großer Gewichtung in dem zweite Register (11), die während jeder Verschiebung erhalten werden.

**14.** Verfahren nach Anspruch 13, gekennzeichnet durch die folgenden in der angegebenen Reihenfolge erfolgten Schritte:

**1. Initialisieren**

- Laden der Größen A und B in ein sechstes und erstes Register (40, 10) mit m*k Bits mit seriellem Eingang und Ausgang und Laden der Wörter $A_0$ und $A_1$ in die dritten und vierten Register (16, 17),
- Initialisieren der ersten und zweiten Additionsschaltungen (30, 31) und der ersten und zweiten Multiplikatorschaltungen (19, 20),
- Auswählen eines zweiten Einganges eines ersten Multiplexers (50), so daß er fortwährend an einem ersten seriellen Eingang der ersten Additionsschaltung (30) logische Nullen liefert,
- Auswählen eines Eingangs eines fünften Multiplexers (55), so daß die durch die zweite Multiplikatorschaltung (20) erzeugten Größen mit einer Verzögerung von k Taktzyklen an einen seriellen Eingang der zweiten Additionsschaltung (31) geliefert werden,
- Auswählen der Eingänge eines sechsten und eines siebten Multiplexers (25, 48), so daß ein Ausgang eines ersten Registers (19) an die seriellen Eingänge der ersten und zweiten Multiplikatorschaltung (19, 20) angeschlossen wird.

**2. Ausführen einer Berechnungsschleife**

**mit dem Index i von i = 1 bis m/2**
**2.1 Iteration 1**

- Laden des Inhalts der dritten und vierten Register (16, 17) in das siebte und achte Register (21, 22) mit k Bits mit parallelem Eingang und Ausgang, wobei die Ausgänge an die parallelen Eingänge der ersten und zweiten Multiplikatorschaltungen (19, 20) angeschlossen sind,
- Ausführen der Multiplikationen der Wörter $A_1$ und $A_0$ mit der Größe B durch die gleichzeitige Verschiebung nach rechts der Inhalte des ersten Registers (10) und des zweiten Registers (11) mit m*k Bits mit seriellem Eingang und Ausgang, wobei die durch die ersten und zweiten Multiplikatorschaltungen (19, 20) erzeugten Größen auf (m+1)*k Bits codiert sind,
- Addition der durch die erste Multiplikatorschaltung (19) erzeugten Bits mit den durch den ersten Multiplexer (50) gelieferten Bits in der ersten Additionsschaltung (30) ,
- Speichern der k ersten Bits, die durch die erste Multiplikatorschaltung (19) erzeugt wurden, in dem fünften Register (12) mit m*k Bits mit seriellem Eingang und Ausgang,
- Addition der (m+1)*k Bits, die durch die zweite Multiplikatorschaltung (20) erzeugt wurden, mit den m*k Bits mit großer Gewichtung, die durch die erste Multiplikatorschaltung (19) erzeugt wurden, wobei diese Bits durch k Nullen vervollständigt sind, in der zweiten Additionsschaltung,
- Speichern der k ersten durch die zweite Additionsschaltung (31) erzeugten Bits im fünften Register (12) und Speichern der m*k folgenden Bits im zweiten Register (11),
- Übertragen der Wörter $A_3$ und $A_2$ in das dritte und vierte Register (16, 17) während der obigen Operationen,
- Auswählen eines ersten Eingangs des ersten Multiplexers (15), damit der Ausgang des zweiten Registers (11) an den ersten Eingang der ersten Additionsschaltung (30) angeschlossen wird.

**2.j Iteration j, mit j von 2 bis m/2-1**

- Laden des Inhalts der dritten und vierten Register (16, 17) in die siebten und achten Register (21, 22),
- Ausführen der Multiplikationen der Wörter $A_{2j-1}$ und $A_{2j-2}$ mit der Größe B durch gleichzeitiges Verschieben des Inhalts der ersten und zweiten Register (10, 11) nach rechts,
- Addition der durch die erste Multiplikatorschaltung (19) erzeugten Bits mit dem Inhalt des zweiten Registers (11) in der ersten Additionsschaltung (30),
- Speichern der k ersten durch die erste Additionsschaltung (30) erzeugten Bits in dem fünften Register (12),
- Addition der (m+1)*k Bits, die durch die zweite Multiplikatorschaltung (20) erzeugt wurden, mit den m*k Bits mit starker Gewichtung, die durch die erste Additionsschaltung (30) erzeugt wurden, die mit k Nullen vervollständigt wurden, um die gleiche Länge der addierten Größen sicherzustellen, in der zweiten Additionsschaltung (31),
- Speichern der k ersten, durch die zweite Additionsschaltung (31) erzeugten Bits in dem fünften Register (12) und Speichern der m*k folgenden Bits in dem zweiten Register (11),
- Übertragen der Wörter $A_{2j+1}$ und $A_{2j}$ in die dritten und vierten Register (16, 17) während der obigen Operationen.

**2.m/2 - Iteration m/2**
Wiederholen des Schrittes 2.j mit Ausnahme der Übertragung der Wörter des sechsten Registers (40) in das dritte und vierte Register (16, 17), wobei die m*k Bits mit schwacher Gewichtung des Ergebnisses in dem fünften Register (12) liegen und die m*k Bits mit starker Gewichtung des Ergebnisses in dem zweiten Register (11) liegen am Ende dieser Iteration.

**Claims**

1. Device for performing an operation A * B or an operation A * B + C + D, A, B, C and D being binary data coded in m words of k bits, m and k being integers, and m being even, the device (4b) comprising:

- a first shift register (10) of m * k bits for containing 3,

- a second shift register (11) of m * k bits for containing part of the updated result of the operation and possibly C or D,

- third and fourth shift registers (16, 17) of k bits having a serial input and a parallel output for successively containing odd and even words of A,

- a fifth shift register (12) of m * k bits for containing part of the updated results of the operation and possibly C or D,

- at least one input terminal (42, 43, 44, 45, 47) for receiving binary data to be stored in these registers,

- a first multiplication circuit (19) for performing a multiplication operation between two data items stored in the first and third registers (10, 16),

- a first addition circuit (30) for performing addition operations between a data item stored in the second register (11) and a data item produced by the first multiplication circuit (19),

characterised in that it has:

- a second multiplication circuit (20) for performing a multiplication operation between two data items stored in the first and fourth registers (10, 17) in parallel to the multiplication operation performed by the first multiplication circuit (19) between the two data items stored in the first and third registers (10, 16),

- a second addition circuit (31) for performing an addition operation between a data item produced by the first addition circuit (30) and a data item supplied to the second addition circuit by the second multiplication circuit (20),

- a first delay cell (54) for delaying, by k cycle times, the supply to the second addition circuit (21) of the data item supplied by the second multiplication circuit (20),

- multiplexing means (50, 48, 56, 53) for selectively supplying, to inputs of the first addition circuit (30), the content of the second register (11) or a permanent logic state, connecting an input of the second multiplication circuit (20) to an output of the first register (10), connecting the output of the first multiplication circuit (19) to one of the registers (12), and supplying to the second addition circuit (31) a data item produced by the first addition circuit (30) or a permanent logic state.

2. Device according to Claim 1, characterised in that the multiplexing means comprise a first multiplexer (50) comprising two serial inputs and one serial output, a first input of the said multiplexer being connected to an output of the second register (11), a second input of the multiplexer receiving a permanent logic state and the output of the multiplexer being connected to an input of the first addition circuit (30).

3. Device according to Claim 2, also comprising a subtraction circuit (28) placed between the second register (11) and the first addition circuit (30) for performing a subtraction operation between a data item stored in the second register (11) and a data item stored in the fifth register (12), characterised in that the first multiplexer (50) comprises a third serial input, the said multiplexer being placed between the subtraction circuit and the first addition circuit and the third input of the said multiplexer being connected to an output of the subtraction circuit (28).

4. Device according to one of Claims 1 to 3, characterised in that it also comprises a third addition circuit (51), mounted in series with the first addition circuit (30) and making it possible to perform addition operations between data stored in the second and fifth registers (11, 12) and a data item produced by the first multiplication circuit (19), and multiplexing means (52) for selectively supplying, to an input of the third addition circuit (51), the content of the fifth register (12) or a permanent logic state.

5. Device according to Claim 4, characterised in that the multiplexing means comprise a second multiplexer (56) having a first input, this first input making it possible to connect the output of the first or third addition circuit (30, 51) to one of the registers for storing all or some of the data produced by addition between data stored in the second and fifth registers (11, 12) and a data item produced by the first multiplication circuit (19).

6. Device according to Claim 5, characterised in that the second multiplexer (56) comprises a second input connected to the output of the second addition circuit for storing in one or more of the registers data produced by this second multiplication circuit.

7. Device according to one of Claims 1 to 6, the third and fourth registers being used for supplying data to the first and second multiplication circuits (19, 20), characterised in that it comprises means for connecting the output of one of the second or fifth registers (11, 12) to inputs of these third and fourth registers.

8. Device according to one of Claims 1 to 6, characterised in that it comprises a sixth register (40) with a serial input and a serial output and multiplexing means (24, 46) for connecting the output of this sixth register to inputs of the third and fourth registers (16, 17).

9. Device according to Claim 8, characterised in that it comprises a third multiplexer (46) for selectively connecting the input of the third register (16) to the output of the sixth register (40) or to an input terminal (47).

10. Device according to one of Claims 8 or 9, characterised in that it comprises a fourth multiplexer (41) comprising two inputs and one output, a first input of the fourth multiplexer (41) being connected to an input terminal (42) for receiving data from outside the device, a second input of the fourth multiplexer (41) being connected to the output of the sixth register (40) for reintroducing into the said register the data which are supplied at its output.

11. Device according to one of Claims 1 to 10, characterised in that it also comprises a second delay cell (34) placed between an output of the first addition circuit (30) and an input of the second addition circuit (31), and in that it comprises multiplexing means (53) for directly connecting the said first and second addition circuits (30, 31), thus avoiding introducing a delay between the said circuits.

12. Device (1) comprising a processor (2), a memory (3), a communication bus (5) and a device (4) defined according to one of Claims 1 to 11.

13. Method of implementing a non-modular multiplication A * B, A and B being binary data coded in m * k bits, m and k being integers, these data being subdivided into m words of k bits $A = A_{m-1} ... A_0$ and $B = B_{m-1} ... B_0$, m being even, characterised in that it includes the steps of:

- loading of the data item B into a first shift register (10) of m * k bits,

- successive loadings of the words of A of even index into a third shift register (16) of k bits with serial input and parallel output,

- successive loadings of the words of A of odd index into a fourth shift register (17) of k bits with serial input and parallel output,

- successive performances, in first and second multipliers (19 and 20), by simultaneous shifting of the first register (10) and a second register (11) of m * k bits intended to contain part of the updated result of the operation, multiplications of B by the words of even index and the words of odd index of A,

- successive additions, in a first addition circuit (30), of logic zeros or of the content of the second register (11) with the result supplied by the first multiplication circuit (19),

- successive additions, in a second addition circuit (31), on the one hand of m * k bits produced by the first multiplication circuit (19) or by the first addition circuit (30), the m * k bits being supplemented by k zeros, and on the other hand of (m + 1) * k bits produced by the second multiplication circuit (20), the data item produced by the second multiplication circuit (20) being delayed by k cycle times,

- successive storages, in a fifth shift register (12) of m * k bits, of the first k bits produced by the first multiplication circuit (19) and the first k bits produced by the second addition circuit (31) at the time of each shift,

- successive storages of the m * k most significant bits obtained at the time of each shift in the second register (11).

14. Method according to Claim 13, characterised in that it comprises the following steps in the order indicated:

   1 - Initialisation

   - loading of the data A and B into a sixth and the first registers (40, 10) of m * k bits, with serial input and output, and loading of the words $A_0$ and $A_1$ into the third and fourth registers (16, 17),

   - initialisation of the first and second addition circuits (30, 31) and the first and second multiplication circuits (19, 20),

   - selection of a second input of a first multiplexer (50), so that it continuously supplies logic zeros to a first serial input of the first addition circuit (30),

   - selection of an input of a fifth multiplexer (55), so that the data produced by the second multiplication circuit (20) are supplied with a delay of k clock pulses to a serial input of the second addition circuit (31),

   - selection of inputs of sixth and seventh multiplexers (25, 48) so as to connect an output of the first register (10) to serial inputs of the first and second multiplication circuits (19, 20).

   2 - Implementation of a calculation loop with i index varying from 1 to m/2

   2.1 - Iteration 1

- loading of the contents of the third and fourth registers (16, 17) into seventh and eighth registers (21, 22) of k bits, with parallel input and output, these outputs being connected to parallel inputs of the first and second multiplication circuits (19, 20),

- performance, by simultaneous shifting to the right of the contents of the first register (10) and second register (11) of m * k bits with serial input and output, of the multiplications of the words $A_1$ and $A_0$ by the data item B, the data produced by the first and second multiplication circuits (19, 20) being coded in (m + 1) * k bits,

- addition, in the first addition circuit (30), of the bits produced by the first multiplication circuit (19) with the bits supplied by the first multiplexer (50),

- storage of the first k bits produced by the first multiplication circuit (19) in the fifth register (12) of m * k bits with serial input and output,

- addition, in the second addition circuit (31), of the (m + 1) * k bits produced by the second multiplication circuit (20) with the m * k most significant bits produced by the first multiplication circuit (19), these bits being supplemented by k zeros,

- storage in the fifth register (12) of the first k bits produced by the second addition circuit (31) and storage of the following m * k bits in the second register (11),

- during the above operations, transfer of the words $A_3$ and $A_2$ into the third and fourth registers (16, 17),

- selection of a first input of the first multiplexer (50), in order to connect the output of the second register (11) to the first input of the first addition circuit (30).

2.j - Iteration j, j varying from 2 to m/2 - 1

- loading of the contents of the third and fourth registers (16, 17) into the seventh and eighth registers (21, 22),

- performance, by simultaneous shifting to the right of the contents of the first and second registers (10, 11), of the multiplications of the words $A_{2j-1}$ and $A_{2j-2}$ by the data item B,

- addition, in the first addition circuit (30), of the bits produced by the first multiplication circuit (19) with the content of the second register (11),

- storage of the first k bits produced by the first addition circuit (30) in the fifth register (12),

- addition, in the second addition circuit (31), of the (m + 1) * k bits produced by the second multiplication circuit (20) with the m * k most significant bits produced by the first addition circuit (30) supplemented by k zeros to ensure identical size of the added data,

- storage in the fifth register (12) of the first k bits produced by the second addition circuit (31) and storage in the second register (11) of the following m * k bits,

- during the above operations, transfer of the words $A_{2j+1}$ and $A_{2j}$ into the third and fourth registers (16, 17).

2.m/2 - Iteration m/2
Repetition of step 2.j, except for the transfer of words from the sixth register (40) into the third and fourth registers (16, 17), the m * k least significant bits of the result being in the fifth register (12) and the m * k most significant bits of the result being in the second register (11) at the end of this iteration.

# FIG_1

EP 0 853 275 B1

# FIG_2

Message clair

Message crypté

FIG_3